# EUROPÄISCHE PATENTSCHRIFT

(11) **EP 1 681 923 B1**
(45) Veröffentlichungstag und Bekanntmachung des Hinweises auf die Patenterteilung: **20.04.2011**
(21) Anmeldenummer: 04790621.9
(22) Anmeldetag: 19.10.2004
(51) Int. Cl.: A01N 25/10, A01N 25/04, A01N 25/30, A01N 47/24

(54) **WIRKSTOFFFORMULIERUNGEN ENTHALTEND COPOLYMERE MIT SULFONSÄURE UND PHENOXYETHYLACRYLAT**
FORMULATIONS CONTAINING COPOLYMERS OF SULFONIC ACID AND PHENOXYETHYL ACETATE
FORMULATIONS CONTENANT DES COPOLYMÈRES D'ACIDE SULFONIQUE ET D'ACÉTATE DE PHENOXYÉTHYLE

(30) Priorität: 30.10.2003 DE 10351004
(43) Veröffentlichungstag der Anmeldung: 26.07.2006
(73) Patentinhaber: BASF SE, 67056 Ludwigshafen (DE)
(72) Erfinder: KOLTZENBURG, Sebastian, 67125 Dannstadt-Schauernheim (DE); LEHMANN, Stephan, 55118 Mainz (DE); STEINMETZ, Bernhard, 97535 Rütschenhausen (DE); SCHROF, Wolfgang, 67271 Neuleiningen (DE); HADELER, Joachim, 34121 Kassel (DE); MAYER, Winfried, 55270 Bubenheim (DE); BRATZ, Matthias, 67133 Maxdorf (DE); GOEDEL, Werner A., 89081 Ulm (DE)
(86) Internationale Anmeldenummer: PCT/EP2004/011797
(87) Internationale Veröffentlichungsnummer: WO 2005/046328

(56) Entgegenhaltungen:
- EP-A2- 0 039 788
- EP-A2- 0 446 636
- EP-A2- 0 750 899
- WO-A1-01/18064
- WO-A2-2004/000916
- US-A- 4 512 969

## Beschreibung

Gegenstand der vorliegenden Erfindung sind Wirkstoffformulierungen, die neben mindestens einem Wirkstoff mindestens ein statistisches radikalisches Copolymer, das als Monomerbausteine mindestens eine olefinisch ungesättigte Sulfonsäure i oder ein Salz davon oder eine Mischung aus Säure und Salz, Phenoxyethylacrylat ii und gegebenenfalls weitere Zusatzstoffe enthält. Die Erfindung betrifft weiterhin Verfahren zur Herstellung der Wirkstoffformulierungen, Dispersionen, die durch Redispergieren dieser Wirkstoffformulierungen in wässrigen Systemen hergestellt werden sowie die Verwendung dieser Wirkstoffformulierungen.

Viele Wirkstoffe werden idealerweise in Form von wässrigen Systemen bereitgestellt. Dies erschwert naturgemäß eine effektive Anwendung von in Wasser nicht oder nur wenig löslichen Wirkstoffen, da die Bioverfügbarkeit und damit die biologische Aktivität gering sind. Viele Wirkstoffe, vor allem im Agro- und Pharmabereich sind von hydrophober Natur und unterliegen deshalb dem genannten Anwendungsproblem.

Es ist bekannt, dass Löslichkeit, Dispergierbarkeit und Bioverfügbarkeit von Wirkstoffpartikeln durch Vergrößerung der Partikeloberfläche, das heisst durch Verkleinerung der Partikelgröße bei gleicher Gesamtmenge erhöht werden kann. Beispielsweise ist die Penetration biologischer Membranen bei kleinerer Partikelgröße vereinfacht.

Das bedeutet gleichzeitig, dass gegenüber der Anwendung des Wirkstoffes in Form größerer Partikel die benötigten Wirkstoffmengen bei Verwendung von Partikeln im Größenbereich von einem Mikrometer und weniger zur Erzielung des gleichen Effektes kleiner sind.

Zur Stabilisierung von nanopartikulären Systemen werden häufig oberflächenaktive Substanzen eingesetzt, die Kristallwachstum und Agglomeration inhibieren. Typische Stabilisatoren sind niedermolekulare Tenside oder Oligomere, die zur Mizellenbildung führen. Nachteilig ist der oftmals niedrige Wirkstoffgehalt derartiger Mizellen.

Aber auch höhermolekulare Hilfsmittel wie beispielsweise Kolloide, amphiphile Polymere und Verdicker geben die Möglichkeit, Wirkstoffteilchen in kleiner Dimension zu stabilisieren.

Während die zuvor genannten Schutzkolloide die Partikel dadurch gegen Agglomeration stabilisieren, dass sie die Oberfläche bedecken und zu repulsiver elektrostatischer und/oder sterischer Wechselwirkung zwischen den Partikeln führen, stabilisieren Verdicker kinetisch durch Herabsetzung der Diffusion und damit der Kollisionsrate zwischen den Teilchen.

WO 97/13503 offenbart eine Methode zur Herstellung von Nanopartikeln, bei der ein Agens und eine Matrix in Lösung zusammengebracht werden um dann in einem Sprühtrocknungsschritt als Nanokompositpulver, welches in wässrigem Milieu redispergiert werden kann, dargestellt zu werden. Die derart erzeugten Nanopartikel sind kleiner als 5000 nm, besonders bevorzugt kleiner als 250 nm. Als mögliche Anwendungen werden neben therapeutischen und diagnostischen Mitteln unter anderem auch Pestizide genannt.

Als Matrixmaterialien sind Kohlenhydrate, Proteine, anorganische Salze, Harze oder Lipide genannt, wobei als Harze Gelatine, Stärke, Polyvinylpyrrolidon, Arabinogalactan, Polyvinylalkohol, Polyacrylsäure, Polyethylen, Polymethacrylate, Polyamid, Poly-(Ethylen-co-vinylacetat) und Schellack, als Kohlenhydrate Cellulosen genannt werden. Zur Redispergierung ist es erforderlich, weitere Komponenten wie Stabilisatoren und Surfactants hinzuzufügen.

EP-A 0 275 796 offenbart ein Verfahren zur Herstellung kolloidal dispergierbarer Systeme durch die Bildung von sphärischen Nanopartikeln. Das Verfahren umfasst das Lösen einer ersten Komponente A in einem Lösungsmittel oder Lösungsmittelgemisch, wobei optional oberflächenaktive Stoffe zugesetzt werden, und das Bereitstellen eines zweiten Lösungsmittels oder Lösungsmittelgemisches, wobei das zweite Lösungsmittel oder das Lösungsmittelgemisch die Komponente A nicht löst. Dabei werden dem zweiten Lösungsmittel oder Lösungsmittelgemisch optional oberflächenaktive Stoffe zugesetzt werden und das zweite Lösungsmittel/Lösungsmittelgemisch ist in jedem verhältnis mit dem Lösungsmittel/Lösungsmittelgemisch der Komponente A mischbar. Beim Mischen der Lösung der Komponente mit dem zweiten Lösungsmittel/Lösungsmittelgemisch in einer Mischkammer mit Kontrolle der Vermischung und Verweilzeit (Mikronisierung) werden Nanopartikel gebildet, die kleiner als 500 nm sind. Als mögliche Komponenten A werden Polymere, Fette, Fettsäureester, biologisch aktive Substanzen, Pigmente, Schmiermittel oder Farbmittel genannt.

WO 98/16105 offenbart feste Pflanzenschutzmittel, bestehend im Wesentlichen aus einem oder mehreren überwiegend amorphen, an sich festen Pflanzenschutzwirkstoffen mit einer Wasserlöslichkeit von weniger als 500 mg/l bei 25°C und einer die Wirkstoffe umgebenden Hüllschicht. Die Herstellung des Mittels erfolgt so, dass man eine flüssige Formulierung des Pflanzenschutz-Wirkstoffs mit einer flüssigen Formulierung eines Hüllmaterials mischt und den derart umhüllten Pflanzenschutzwirkstoff trocknet. Bevorzugte Lösungsmittel sind flüchtige, mit Wasser mischbare Solventien. Die getrockneten Nanopartikel lassen sich in wässrigen Medien redispergieren, die Teilchengrößen betragen 0,1 bis 0,8 Mikrometer. Als Hüllschichtmaterialien eignen sich grenzflächen- oder oberflächenaktive polymere Kolloide oder oligomere, amphiphile Verbindungen oder Mischungen daraus. Vorzugsweise werden Biopolymere und modifizierte Biopolymere eingesetzt. Weiterhin geeignet sind synthetische anionische und neutrale Polymere beispielsweise wie Polyvinylalkohol, Polyvinylpyrrolidon und Polyacrylsäure. WO 03/039249 bezieht sich auf eine feste Pflanzenschutzformulierung aus einem Pflanzenschutzmittel und einem statistisch radikalischen Copolymer, das mindestens ein hydrophiles und ein hydrophobes Monomer als polymerisierte Einheiten und optional weitere Additive enthält. In der beschriebenen wässrigen Dispersion befinden sich mindestens 50% der dispergierten Partikel in einem röntgenamorphen Zustand. Als hydrophile Monomere werden prokationische stickstoffhaltige Verbindungen wie vinylsubstituierte Pyridine oder aminoalkylsubstituierte (Meth)acrylamide eingesetzt.

EP-A 0 875 143 offenbart Pestizid-Zusammensetzungen mit 0,01 bis 40 Gew.-% Polymeranteil, in denen mindestens eine der Komponenten ein Polymer ist, das die Kristallisation des Pestizid-Wirkstoffes der Zusammensetzung erniedrigt.

Die Polymere können lipophilen oder sowohl lipo- als auch hydrophilen Charakter haben. Der hydrophile Charakter wird durch Monomereinheiten bestimmt, die ausgewählt sind substituierten Alkylestern, Alkylthioestern und Mono- oder Dialkylamiden monoethylenisch ungesättigter Monomerer wie Acryl-, Methacryl-, Fumar-, Malein- und Itaconsäuren, substituierten oder unsubstituierten Vinylestern von C₁-C₄-Carboxylaten, cyclischen Estern, Amiden und Heterozyklen und vinylsubstituierten Aminen.

Der lipophile Charakter wird den Polymeren durch ethylenisch ungesättigte Monomere wie langkettigen Alkylestern und mono- oder disubstituierten Alkylamiden der Acrylsäure, Methacrylsäure, Fumarsäure, Maleinsäure oder Itaconsäure, durch α-Olefine oder Vinylalkoholester, Vinylhalogenide, Vinylnitrile und Vinylcarboxylate verliehen.

WO 02/082900 beschreibt wässrige Suspensionen von Nanopartikeln. Die Nanopartikel sind aus einer amphiphilen Verbindung mit mindestens einer hydrophoben und mindestens einer hydrophilen Einheit und mindestens 50 Gewichtsprozent einer organischen, wasserunlöslichen agrochemischen Substanz auf 100 Teile der amphiphilen Verbindung aufgebaut. Als Phasenvermittler werden amphiphile Diblockcopolymere offenbart.

DE-A 10151392 beschreibt pulverförmige Wirkstoffformulierungen, die aus einem biologischen Wirkstoff, einem Dispergiermittel, Polyvinylalkohol sowie gegebenenfalls Zusatzstoffen bestehen. Dabei werden der Wirkstoff und das Dispergiermittel in wässriger Phase suspendiert und bis zur Schmelze erwärmt, es bildet sich eine Emulsion. Diese Emulsion wird mit einem Strahldispergator homogenisiert und dann schnell bis zur Erstarrung der dispergierten Schmelze abgekühlt. Die feinteilige Dispersion wird danach mit wässriger Polyvinylalkohollösung versetzt, wodurch sich ein die Dispersionspartikel umschließender Film von Polyvinylalkohol bildet.

EP-A 0875 142 offenbart Dispersionen von Pflanzenschutzwirkstoffen in landwirtschaftlichen Ölen und eine Methode zur Herstellung dieser Dispersionen. Die Größe der dispergierten Partikel liegt zwischen 0.5 und 10 Mikrometern. Die Polymere, die zur Dispergierung der Wirkstoffe eingesetzt werden, bestehen zu 2.5 bis 35 Gew.-% aus polaren Monomeren. Als polare Monomere werden Hydroxy-, Carbonsäure- und Stickstoffgruppen tragende Monomere verwendet. Bevorzugte Monomere sind langkettige (Meth)Acrylate und als polares Monomer Dimethylaminopropylmethacrylamid (DMAP-MA).

US 4,512,969 offenbart eine Zusammensetzung enthaltend eine wässrige Phase und Polymerpartikel, welche beladen sind mit einem hydrophoben Pestizid, das schwer wasserlöslich ist und im Polymerpartikel verteilt ist.

Aufgabe der vorliegenden Erfindung war es, neue Möglichkeiten zur Formulierung von Wirkstoffen, insbesondere zur Nanodispergierung von an sich schwer wasserlöslichen Wirkstoffen in wässrigem Milieu bereitzustellen.

Die vorliegende Erfindung betrifft Wirkstoffformulierungen, enthaltend
a) mindestens einen Wirkstoff,
b) mindestens ein statistisches radikalisches Copolymer, enthaltend als Monomere mindestens eine olefinisch ungesättigte Sulfonsäure der Formel I 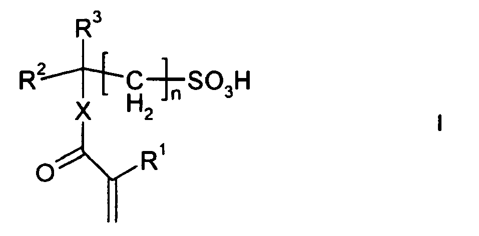 wobei X Sauerstoff oder NR⁵, R¹ Wasserstoff oder Methyl bedeuten, n einen Wert von 0 bis 10 annehmen kann und R² und R³ unabhängig voneinander C₁- bis C₆-Alkyl, R⁵ Wasserstoff, Alkyl, Aryl, Alkylaryl, Arylalkyl, Alkoxyalkyl, Aryloxyalkyl, Alkoxyaryl, Hydroxyalkyl, (Di)Alkylaminoalkyl, (Di)Alkylaminoaryl, (Di)Arylaminoalkyl, Alkylarylaminoalkyl, Alkylarylaminoaryl, wobei die Arylreste substituiert sein können, bedeuten und die olefinische ungesättigte Sulfonsäure in Säure- oder Salzform oder als Mischung von Säure- und Salzform vorliegen kann, Phenoxyethylacrylat, und
   optional weitere olefinisch ungesättigte Monomere der Formel IIb 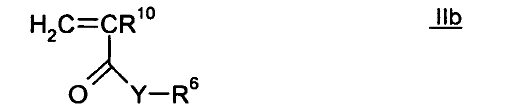 wobei Y O oder NR⁵, R¹⁰ Wasserstoff oder Methyl, R⁵, R⁶ Wasserstoff, Alkyl, Aryl, Alkylaryl, Arylalkyl, Alkoxyalkyl, Aryloxyalkyl, Alkoxyaryl, Hydroxyalkyl, (Di)Alkylaminoalkyl, (Di)Alkylaminoaryl, (Di)Arylaminoalkyl, Alkylarylaminoalkyl, Alkylarylaminoaryl, wobei die Arylreste substituiert sein können,
   sowie
**c) gegebenenfalls weitere Zusatzstoffe**
   herstellbar durch ein Verfahren, wobei man
   (i) die Komponenten a) und b) und gegebenenfalls c) sowie optional weitere Zusatzstoffe getrennt voneinander in gleichen oder verschiedenen organischen Lösungsmitteln löst und die Lösungen miteinander mischt und optional anschließend das Lösungsmittel in üblicher Weise weitestgehend entfernt ; oder
   (ii) eine gemeinsame Lösung der Komponenten a) und b) und gegebenenfalls c) sowie optional weiteren Zusatzstoffen herstellt, indem man eine der Komponenten in einem organischen Lösungsmittel gelöst vorlegt, die weiteren Komponenten hinzufügt und löst und optional anschließend das Lösungsmittel in üblicher Weise weitestgehend entfernt; oder
   (iii) die Komponente b) sowie optional weitere Zusatzstoffe in wässrige Lösung bringt, die Komponenten a) und gegebenenfalls c) sowie optional weitere Zusatzstoffe in einem oder mehreren mit Wasser mischbaren organischen Lösungsmitteln löst, die Lösungen der Komponenten miteinander mischt, durch Energieeintrag die Wirkstoffformulierung in dispergierter Form erhält und optional anschließend die Lösungsmittel in üblicher Weise weitestgehend entfernt.

Salze der Sulfonsäure der Formel I sind bevorzugt Alkali- oder Ammoniumsalze.

Als Alkylreste allein oder in den genannten Kombinationen kommen C₁ bis C₂₀-Alkyl in Betracht. Insbesondere seien genannt C₁- bis C₆-Alkyl wie Methyl, Ethyl, Propyl, 1-Methylethyl, Butyl, 1-Methylpropyl, 2-Methylpropyl, 1,1-Dimethylethyl, Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, Hexyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 1,1,2-Trimethylpropyl, 1,2,2-Trimethylpropyl, 1-Ethyl-1-Methylpropyl und 1-Ethyl-2-Methylpropyl, Cyclohexyl, n-Heptyl, n-Octyl, 2-Ethylhexyl, Decyl, Isodecyl, Undecyl, Lauryl, Tridecyl, Myristyl, Pentadecyl-, Cetyl, Heptadecyl, Stearyl.

Unter Arylresten werden ein oder mehrkernige, gegebenenfalls substituierte aromatische Kohlenwasserstoffreste verstanden. Beispielsweise seien Phenyl, Naphthyl oder durch Halogen wie Fluor oder Chlor substituiertes Phenyl genannt.

Alkoxy steht für einen Alkylrest, der über ein Sauerstoffatom (-O-) an das Gerüst gebunden ist.

Aryloxy steht für einen Arylrest, der über ein Sauerstoffatom (-O-) an das Gerüst gebunden ist.

Beispielsweise stehen Alkylaryl für Tolyl, Arylalkyl für Benzyl, Alkoxyalkyl für Ethoxyethyl, Aryloxyalkyl für Phenoxyethyl, Alkoxyaryl für Methoxyphenyl, Hydroxyalkyl für Hydroxyethyl, (Di)Alkylaminoalkyl für Dimethylaminopropyl.

Unter einem mit "radikalisch" bezeichneten Polymer wird ein durch radikalische Polymerisation hergestelltes Polymer verstanden.

Unter einem mit "statistisch" bezeichneten Copolymer wird ein Copolymer verstanden bei dem die Monomersequenz durch die Copolymerisationsparameter der Monomere bestimmt wird. Entsprechendes gilt auch für Copolymere bestehend aus mehr als zwei Monomerarten.

Diese Art von Polymeren wird auch als random-Copolymere bezeichnet.

Die Sulfonsäuren der Formel I können in Säure- oder Salzform oder als Mischung von Säure- und Salzform vorliegen. Stellvertretend für alle diese Formen wird der Begriff "Sulfonsäure" verwendet.

Salze der Sulfonsäure sind Metallsalze, insbesondere Alkalimetallsalze wie Lithium-, Natrium- oder Kaliumsalze oder Ammoniumsalze.

In einer besonders bevorzugten Ausführungsform ist das erfindungsgemäße statistische radikalische Copolymer aus mindestens einer olefinisch ungesättigten Sulfonsäure der Formel I und Phenoxyethylacrylat aufgebaut.

In einer weiteren besonders bevorzugten Ausführungsform enthält das statistische radikalische Copolymer als Monomere 2-Acrylamido-2-Methyl-1-propansulfonsäure und mindestens ein olefinisch ungesättigtes Monomer der Formel II, wobei Y Sauerstoff, R⁴ Wasserstoff und R⁶ Wasserstoff oder Alkyl bedeuten.

Demnach enthält das statistische radikalische Copolymer in dieser besonders bevorzugten Ausführungsform als Monomere 2-Acrylamido-2-Methyl-1-propansulfonsäure und mindestens einen Ester der Acrylsäure.

Solche Ester der Acrylsäure sind beispielsweise Methylacrylat, Ethylacrylat, Propylacrylat, Isopropylacrylat, Butylacrylat, 2-Methylpropylacrylat, tert-Butylacrylat, Hexylacrylat, Cyclohexylacrylat, n-Octylacrylat, 2-Ethylhexylacrylat, Decylacrylat, Isodecylacrylat, Undecylacrylat, Laurylacrylat, Tridecylacrylat, Myristylacrylat, Pentadecyl-acrylat, Cetylacrylat, Heptadecylacrylat, Stearylacrylat.

In einer ganz besonders bevorzugten Ausführungsform enthält das statistische radikalische Copolymer als Monomere 2-Acrylamido-2-Methyl-1-propansulfonsäure, Phenoxyethylacrylat und mindestens einen Ester der Acrylsäure.

In einer weiteren ganz besonders bevorzugten Ausführungsform ist das statistische radikalische Copolymer aus den Monomeren 2-Acrylamido-2-Methyl-1-propansulfonsäure und Phenoxyethylacrylat aufgebaut.

Die Molmassen M_{w} und Mₙ sowie die Uneinheitlichkeit der Polymere werden durch Größenausschlusschromatographie bestimmt. Als Kalibrationsmaterial können handelsübliche PMMA-Eichsätze verwendet werden.

Erfindungsgemäß beträgt der prozentuale Anteil der mindestens einen olefinisch ungesättigten Sulfonsäure an der Gesamtmasse des mindestens einen statistisch radikalischen Copolymers 10 bis 90, bevorzugt 20 bis 80 und besonders bevorzugt 30 bis 70 Gewichtsprozent.

Die erfindungsgemäßen statistischen radikalischen Copolymere werden bevorzugt in üblicher Weise durch freie radikalische Polymerisation synthetisiert. Es können aber auch andere, z.B. kontrolliert radikalische Verfahren zur Polymerisation eingesetzt werden. Die Polymerisation wird in Gegenwart der Monomere und eines oder mehreren Initiatoren durchgeführt und kann mit oder ohne Lösungsmittel, in Emulsion oder in Suspension durchgeführt werden.

Die Polymerisation kann als Batchreaktion, in semikontinuierlicher oder kontinuierlicher Fahrweise durchgeführt werden.

Die Reaktionszeiten liegen im allgemeinen im Bereich zwischen 1 und 12 Stunden. Der Temperaturbereich, in dem die Reaktionen durchgeführt werden können, reicht im allgemeinen von 20 bis 200°C, bevorzugt von 40 bis 120°C.

Als Initiator für die radikalische Polymerisation werden übliche radikalbildende Substanzen eingesetzt. Bevorzugt wird der Initiator aus der Gruppe der Azoverbindungen, der Peroxidverbindungen oder der Hydroperoxidverbindungen gewählt. Beispielsweise seien genannt Acetylperoxid, Benzoylperoxid, Lauroylperoxid, Tert-Butylperoxyisobutyrat, Caproylperoxid, Cumolhydroperoxid, Azobisisobutyronitril oder 2,2-Azobis(2-Methylbutan)nitril. Besonders bevorzugt ist Azobisisobutyronitril (AIBN).

Die radikalische Polymerisation wird bevorzugt in Lösung durchgeführt. Lösungsmittel sind Wasser, Alkohole, wie z.B. Methanol, Ethanol, Isopropanol, dipolar-aprotische Lösungsmittel wie z.B. DMF, DMSO oder NMP, aromatische, aliphatische, halogenierte oder unhalogenierte Kohlenwasserstoffe, wie z.B. Hexan, Chlorbenzol, Toluol oder Benzol. Bevorzugte Lösungsmittel sind Isopropanol, Methanol, Toluol, DMF, NMP, DMSO und Hexan, besonders bevorzugt ist DMF.

Erfindungsgemäß liegt das Verhältnis der Gewichtsanteile von Wirkstoff(en) zu statistisch radikalisch(en) Copolymer(en) im Bereich von 1:10 bis 10:1, bevorzugt im Bereich von 1:4 bis 4:1, besonders bevorzugt im Bereich von 1:2 bis 2:1.

Als Wirkstoffe im Sinne der vorliegenden Erfindung kommen vorzugsweise schwer wasserlösliche Wirkstoffe wie biologisch oder pharmazeutisch aktive Verbindungen, aber auch schwer wasserlösliche Effektstoffe wie Farbmittel, Riechstoffe, Aromen und in der Kosmetik verwendete Wirk- und Effektstoffe in Betracht. Schwer wasserlöslich bedeutet eine Wasserlöslichkeit von weniger als 1000 mg/l, bevorzugt weniger als 100 mg/l jeweils bei einer Temperatur von 20°C.

In den erfindungsgemäßen Formulierungen können mehrere solcher Wirkstoffe nebeneinander vorliegen.

Die Erfindung betrifft bevorzugt die Formulierung von Pflanzenschutzwirkstoffen, Herstellung von Dispergaten dieser Pflanzenschutzformulierungen und Mittel und Verfahren zur Bekämpfung von Schädlingen und unerwünschten Pflanzenwachstums durch Verwendung der erfindungsgemäßen Pflanzenschutzformulierung.

Als Pflanzenschutzwirkstoffe seien Fungizide, Bakterizide, Insektizide, Akarizide, Nematizide, Molluskizide, Herbizide und Pflanzenwuchsregulatoren genannt.

Bevorzugte Pflanzenschutzwirkstoffe sind Herbizide, Akarizide, Insektizide, Nematizide und Fungizide, die unter http://www.hclrss.demon.co.uk/index_cn_frame.html (Index of common names) aufgeführt sind. Beispielsweise seien die folgenden Herbizide, Akarizide, Insektizide, Nematizide und Fungizide genannt:
Abamectin, acephate, acequinocyl, acetamiprid, acethion, acetochlor, acetoprole, acifluorfen, aclonifen, ACN, acrinathrin, acrolein, acrylonitrile, acypetacs, alachlor, alanap, alanycarb aldicarb, aldimorph, aldoxycarb, aldrin, allethrin, d-trans-allethrin, allidochlor, allosamidin, alloxydim, allyl alcohol, allyxycarb, alorac, alpha-cypermethrin, ametridione, ametryn, ametryne, amibuzin, amicarbazone, amidithion, amidoflumet, amidosulfuron, aminocarb, aminotriazole, amiprofos-methyl, amiton, amitraz, amitrole, ammonium sulfamate, ampropylfos, AMS, anabasine, anilazine, anilofos, anisuron, arprocarb, arsenous oxide, asulam, athidathion, atraton, atrazine, aureofungin, avermectin B1, azaconazole, azadirachtin, azafenidin, azamethiphos, azidithion, azimsulfuron, azinphosethyl, azinphosmethyl, aziprotryn, azithiram, azobenzene, azocyclotin, azothoate, azoxystrobin, barban (= barbanate), barium hexafluorosilicate, barium polysulfide, barium silicofluoride, barthrin, BCPC, beflubutamid, benalaxyl, benazolin, bendiocarb, bendioxide, benefin (= benfluralin), benfuracarb, benfuresate, benodanil, benomyl, benoxafos, benquinox, bensulfuron, bensulide, bensultap, bentaluron, bentazon, benthiocarb, benzadox, benzalkonium chloride, benzamacril, benzamizole, benzamorf, benzene hexachloride, benzfendizone, benzipram, benzobicyclon, benzoepin, benzofenap, benzofluor, benzohydroxamic acid, benzomate benzoximate (= benzoylprop), benzthiazuron, benzyl benzoate, beta-cyfluthrin, beta-cypermethrin, bethoxazin, BHC, gamma-BHC, bialaphos, bifenazate, bifenox, bifenthrin, bilanafos, binapacryl, bioallethrin, bioethanomethrin, biopermethrin, bioresmethrin, biphenyl, bispyribac, bistrifluron, bitertanol, bithionol, blasticidin-S, borax, Bordeaux mixture, BPPS, bromacil, bromchlophos, bromfenvinfos, bromobonil, bromobutide, bromocyclen, bromo-DDT, bromofenoxim, bromomethane, bromophos, bromophos-ethyl, bromopropylate, bromoxynil, brompyrazon, bromuconazole, BRP, bufencarb, bupirimate, buprofezin, Burgundy mixture, butacarb, butachlor, butafenacil, butam, butamifos, butathiofos, butenachlor, buthidazole, buthiobate, buthiuron, butocarboxim, butonate, butoxycarboxim, butralin, butroxydim, buturon, butylamine, butylate, butylchlorophos, cacodylic acid, cadusafos, cafenstrole, caffeine, calcium arsenate, calcium chlorate, calcium cyanamide, calcium polysulfide, cambendichlor, camphechlor, captafol, captan, carbam, carbamorph, carbanolate, carbaryl, carbasulam, carbathion, carbendazim, carbetamide, carbofuran, carbon disulfide, carbon tetrachloride, carbophenothion, carbophos, carbosulfan, carboxazole, carboxin, carfentrazone, carpropamid, cartap, carvone, CDAA, CDEA, CDEC, CEPC, cerenox, cevadilla, Cheshunt mixture, chinalphos, chinalphosmethyl, chinomethionat, chlobenthiazone, chlomethoxyfen, chlor-IPC, chloramben, chloraniformethan, chloranil, chloranocryl, chlorazifop, chlorazine, chlorbenside, chlorbicyclen, chlorbromuron, chlorbufam, chlordane, chlordecone, chlordimeform, chlorethoxyfos, chloreturon, chlorfenac, chlorfenapyr, chlorfenazole, chlorfenethol, chlorfenidim, chlorfénizon, chlorfenprop, chlorfenson, chlorfensulphide, chlorfenvinphos, chlorfenvinphos-methyl, chlorfluazuron, chlorflurazole, chlorflurecol, chlorflurenol, chloridazon, chlorimuron, chlorinate, chlormephos, chlormethoxynil, chlornitrofen, chloroacetic acid, chlorobenzilate, chloroform, chloromebuform, chloromethiuron, chloroneb, chlorophos, chloropicrin, chloropon, chloropropylate, chlorothalonil, chlorotoluron, chloroxifenidim (= chloroxuron), chloroxynil, chlorphoxim, chlorprazophos, chlorprocarb, chlorpropham, chlorpyrifos, chlorpyrifos-methyl, chlorquinox, chlorsulfuron, chlorthal, chlorthiamid, chlorthiophos, chlortoluron, chlozolinate, chromafenozide, cinerin I, cinerin II, cinmethylin, cinosulfuron, cisanilide, cismethrin, clethodim, climbazole, cliodinate, clodinafop, cloethocarb, clofentezine, clofop, clomazone, clomeprop, cloprop, cloproxydim, clopyralid, cloransulam, closantel, clothianidin, clotrimazole, CMA, CMMP, CMP, CMU, copper acetate, copper acetoarsenite, copper arsenate, copper carbonate, basic, copper hydroxide, copper naphthenate, copper oleate, copper oxychloride, copper 8-quinolinolate, copper silicate, copper sulfate, copper sulfate, basic, copper zinc chromate, coumaphos, coumithoate, 4-CPA, 4-CPB, CPMF, 4-CPP, CPPC, cresol (= cresylic acid), crotamiton, crotoxyfos, crufomate, cryolite, cufraneb, cumyluron, cuprobam, cuprous oxide, CVMP, cyanatryn, cyanazine, cyanofenphos, cyanophos, cyanthoate, cyazofamid, cyclafuramid, cyclethrin, cycloate, cycloheximide, cycloprothrin, cyclosulfamuron, cycloxydim, cyflufenamid, cycluron, cyfluthrin, beta-cyfluthrin, cyhalofop, cyhalothrin, gamma-cyhalothrin, lambda-cyhalothrin, cyhexatin, cymoxanil, cypendazole, cypermethrin, alpha-cypermethrin, beta-cypermethrin, theta-cypermethrin, zeta-cypermethrin, cyperquat, cyphenothrin, cyprazine, cyprazole, cyprex, cyproconazole, cyprodinil, cyprofuram, cypromid, cyromazine, cythioate, 2,4-D, 3,4-DA, daimuron, dalapon, dazomet, 2,4-DB, 3,4-DB, DBCP, DCB, DCIP, DCPA (USA), DCPA (Japan), DCU, DDD, DDPP, DDT, pp (pure)-DDT, DDVP, 2,4-DEB, debacarb, decafentin, decarbofuran, dehydroacetic acid, deiquat, delachlor, delnav, deltamethrin, demephion, demephion-O, demephion-S, demeton, demeton-methyl, demeton-O, demeton-O-methyl, demeton-S, demeton-S-methyl, demeton-S-methylsulphon (= demeton-S-methyl sulphone), DEP, 2,4-DEP, depalléthrine, derris, 2,4-DES, desmedipham, desmetryn (= desmetryne), diafenthiuron, dialifos, diallate, diamidafos, dianat, diazinon, dibrom, 1,2-dibromoethane, dicamba, dicapthon, dichlobenil, dichlofenthion, dichlofluanid, dichlone, dichloralurea, dichlorfenidim, dichlormate, o-dichlorobenzene, p-dichlorobenzene, 1,2-dichloroethane, dichloromethane, dichlorophen, 1,2-dichloropropane, 1,3-dichloropropene, dichlorprop, dichlorprop-P, dichlorvos, dichlozoline, diclobutrazol, diclocymet, diclofop, diclomezine, dicloran, diclosulam, dicofol, dicresyl, dicrotophos, dicryl, dicyclanil, dieldrin, dienochlor, diethamquat, diethatyl, diethion, diethofencarb, diethyl pyrocarbonate, difenoconazole, difenopenten, difenoxuron, difenzoquat, diflubenzuron, diflufenican (= diflufenicanil), diflufenzopyr, diflumetorim, dilor, dimefox, dimefuron, dimehypo, dimepiperate, dimetan, dimethachlor, dimethametryn, dimethenamid, dimethenamid-P, dimethirimol, dimethoate, dimethomorph, dimethrin, dimethylvinphos, dimetilan, dimexano, dimidazon, dimoxystrobin, dimpylate, dinex, diniconazole, diniconazole-M, dinitramine, dinobuton, dinocap, dinocap-4, dinocap-6, dinocton, dinofenate, dinopenton, dinoprop, dinosam, dinoseb, dinosulfon, dinotefuran, dinoterb, dinoterbon, diofenolan, dioxabenzofos, dioxacarb, dioxathion, diphenamid, diphenyl sulfone, diphenylamine, diphenylsulphide, dipropetryn, dipterex, dipyrithione, diquat, disugran, disul, disulfiram, disulfoton, ditalimfos, dithianon, dithicrofos, dithiométon, dithiopyr, diuron, dixanthogen, DMPA, DNOC, dodemorph, dodicin, dodine, dofenapyn, doguadine, doramectin (= 2,4-DP), 3,4-DP, DPC, drazoxolon, DSMA, d-trans-allethrin, dymron, EBEP, ecdysone (= ecdysterone), echlomezol, EDB, EDC, EDDP (= edifenphos), eglinazine, emamectin, EMPC, empenthrin, endosulfan, endothal (= endothall), endothion, endrin, ephirsulfonate, EPN, epofenonane, epoxiconazole, eprinomectin, epronaz, EPTC, erbon, esfenvalerate, ESP, esprocarb, etaconazole, etaphos, etem, ethaboxam, ethalfluralin, ethametsulfuron, ethidimuron, ethiofencarb, ethiolate, ethion, ethiprole, ethirimol, ethoate-methyl, ethofumesate, ethoprop (= ethoprophos), ethoxyfen, ethoxyquin, ethoxysulfuron, ethyl pyrophosphate, ethylan (= ethyl-DDD), ethylene dibromide, ethylene dichloride, ethylene oxide, ethyl formate, ethylmercury acetate, ethylmercury bromide, ethylmercury chloride, ethylmercury phosphate, etinofen, ETM, etnipromid, etobenzanid, etofenprox, etoxazole, etridiazole, etrimfos, EXD, famoxadone, famphur, fenac, fenamidone, fenaminosulf, fenamiphos, fenapanil, fenarimol, fenasulam, fenazaflor, fenazaquin, fenbuconazole, fenbutatin oxide, fenchlorphos, fenethacarb, fenfluthrin, fenfuram, fenhexamid, fenidin, fenitropan, fenitrothion, fénizon, fenobucarb, fenolovo, fenoprop, fenothiocarb, fenoxacrim, fenoxanil, fenoxaprop, fenoxaprop-P, fenoxycarb, fenpiclonil, fenpirithrin, fenpropathrin, fenpropidin, fenpropimorph, fenpyroximate, fenridazon, fenson, fensulfothion, fenteracol, fenthiaprop, fenthion, fenthion-ethyl, fentiaprop, fentin, fentrazamide, fentrifanil, fenuron, fenvalerate, ferbam, ferimzone, ferrous sulfate, fipronil, flamprop, flamprop-M, flazasulfuron, flonicamid, florasulam, fluacrypyrim, fluazifop, fluazifop-P, fluazinam, fluazolate, fluazuron, flubenzimine, flucarbazone, fluchloralin, flucofuron, flucycloxuron, flucythrinate, fludioxonil, fluenetil, flufenacet, flufenerim, flufenican, flufenoxuron, flufenprox, flufenpyr, flumethrin, flumetover, flumetsulam, flumezin, flumiclorac, flumioxazin, flumipropyn, fluometuron, fluorbenside, fluoridamid, fluorochloridone, fluorodifen, fluoroglycofen, fluoroimide, fluoromidine, fluoronitrofen, fluothiuron, fluotrimazole, flupoxam, flupropacil, flupropanate, flupyrsulfuron, fluquinconazole, fluridone, flurochloridone, fluromidine, fluroxypyr, flurtamone, flusilazole, flusulfamide, fluthiacet, flutolanil, flutriafol, fluvalinate, tau-fluvalinate, folpel (= folpet), fomesafen, fonofos, foramsulfuron, formaldehyde, formetanate, formothion, formparanate, fosamine, fosetyl, fosmethilan, fospirate, fosthiazate, fosthietan, fthalide, fuberidazole, furalaxyl, furametpyr, furathiocarb, furcarbanil, furconazole, furconazole-cis, furethrin, furmecyclox, furophanate, furyloxyfen, gamma-BHC, gamma-cyhalothrin, gamma-HCH, glufosinate, glyodin, glyphosate, griseofulvin, guanoctine (= guazatine), halacrinate, halfenprox, halofenozide, halosafen, halosulfuron, haloxydine, haloxyfop, HCA, HCH, gamma-HCH, HEOD, heptachlor, heptenophos, heterophos, hexachlor (= hexachloran), hexachloroacetone, hexachlorobenzene, hexachlorobutadiene, hexaconazole, hexaflumuron, hexafluoramin, hexaflurate, hexazinone, hexylthiofos, hexythiazox, HHDN, hydramethylnon, hydrogen, cyanide, hydroprene, hydroxyisoxazole, 8-hydroxyquinoline, sulfate, hymexazol, hyquincarb, IBP, imazalil, imazamethabenz, i-mazamox, imazapic, imazapyr, imazaquin, imazethapyr, imazosulfuron, imibenconazole, imidacloprid, iminoctadine, imiprothrin, indanofan, indoxacarb, iodobonil, iodofenphos, iodosulfuron, ioxynil, ipazine, IPC, ipconazole, iprobenfos, iprodione, iprovalicarb, iprymidam, IPSP, IPX, isamidofos, isazofos, isobenzan, isocarbamid, isocil, i-sodrin, isofenphos, isomethiozin, isonoruron, isopolinate, isoprocarb, isoprocil, isopropalin, isoprothiolane, isoproturon, isothioate, isouron, isovaledione, isoxaben, isoxachlortole, isoxaflutole, isoxapyrifop, isoxathion, isuron, ivermectin, jasmolin I, jasmolin II, jodfenphos, juvenile, hormone I, juvenile, hormone II, juvenile, hormone III, karbutilate, kasugamycin, kelevan, kinoprene, kresoxim-methyl, lactofen, lambda-cyhalothrin, lead arsenate, lenacil, leptophos, lime sulfur, d-limonene, lindane, linuron, lirimfos, lufenuron, lythidathion, M-74, M-81, MAA, malathion, maldison, malonoben, MAMA, mancopper, mancozeb, maneb, mazidox, MCC, MCPA, MCPA-thioethyl, MCPB, 2,4-MCPB, mebenil, mecarbam, mecarbinzid, mecarphon, mecoprop, mecoprop-P, medinoterb, mefenacet, mefluidide, menazon, MEP, mepanipyrim, mephosfolan, mepronil, mercaptodimethur, mercaptophos, mercaptophos-teolovy, mercaptothion, mercuric, chloride,
mercuric oxide, mercurous, chloride, mesoprazine, mesosulfuron, mesotrione, mesulfen, mesulfenfos, mesulphen, metalaxyl, metalaxyl-M, metam, metamitron, metaphos, metaxon, metazachlor, metazoxolon, metconazole, metflurazon, methabenzthiazuron, methacrifos, methalpropalin, metham, methamidophos, methasulfocarb, methazole, methfuroxam, methibenzuron, methidathion, methiobencarb, methiocarb, methiuron, methocrotophos, métholcarb, methometon, methomyl, methoprene, methoprotryn, methoprotryne, methoxychlor, 2-methoxyethylmercury, chloride, methoxyfenozide, methyl bromide, methylchloroform, methyldithiocarbamic, acid, methyldymron, methylene, chloride, methyl, isothiocyanate, methyl-mercaptophos, methylmercaptophos, oxide, methyl-mercaptophos-teolovy, methylmercury, benzoate, methylmercury, dicyandiamide, methyl parathion, methyltriazothion, metiram, metobenzuron, metobromuron, metolachlor, S-metolachlor, metolcarb, metominostrobin, metosulam, metoxadiazone, metoxuron, metrafenone, metribuzin, metriphonate, metsulfovax, metsulfuron, mevinphos, mexacarbate, milbemectin, milneb, mipafox, MIPC, mirex, MNAF, molinate, monalide, monisouron, monochloroacetic, acid, monocrotophos, monolinuron, monosulfiram, monuron, morfamquat, morphothion, MPMC, MSMA, MTMC, myclobutanil, myclozolin, nabam, naftalofos, naled, naphthalene, naphthalic, anhydride, naphthalophos, naproanilide, napropamide, naptalam, natamycin, neburea, neburon, nendrin, nichlorfos, niclofen, niclosamide, nicobifen, nicosulfuron, nicotine, nifluridide, nikkomycins, NIP, nipyraclofen, nitenpyram, nithiazine, nitralin, nitrapyrin, nitrilacarb, nitrofen, nitrofluorfen, nitrostyrene, nitrothal-isopropyl, nobormide, norbormide, norea, norflurazon, noruron, novaluron, noviflumuron, NPA, nuarimol, OCH, octhilinone, o-dichlorobenzene, ofurace, omethoate, orbencarb, orthobencarb, ortho-dichlorobenzene, oryzalin, ovatron, ovex, oxadiargyl, oxadiazon, oxadixyl, oxamyl, oxapyrazon, oxasulfuron, oxaziclomefone, oxine-copper, oxine-Cu, oxpoconazole, oxycarboxin, oxydemeton-methyl, oxydeprofos, oxydisulfoton, oxyfluorfen, oxythioquinox, PAC, palléthrine, PAP, paradichlorobenzene, parafluron, paraquat, parathion, parathion-methyl, Paris green, PCNB, PCP, p-dichlorobenzene, pebulate, pédinex, pefurazoate, penconazole, pencycuron, pendimethalin, penfluron, penoxsulam, pentachlorophenol, pentanochlor, pentoxazone, perfluidone, permethrin, pethoxamid, PHC, phénétacarbe, phenisopham, phenkapton, phenmedipham, phenmedipham-ethyl, phenobenzuron, phenothiol, phenothrin, phenthoate, phenylmercuriurea, phenylmercury acetate, phenylmercury chloride, phenylmercury nitrate, phenylmercury salicylate, 2-phenylphenol, phorate, phosalone, phosdiphen, phosfolan, phosmet, phosnichlor, phosphamide, phosphamidon, phosphine, phosphocarb, phoxim, phoxim-methyl, phthalide, phthalophos, phthalthrin, picloram, picolinafen, picoxystrobin, piperophos, pirimetaphos, pirimicarb, pirimiphosethyl, pirimiphos-methyl, PMA, PMP, polycarbamate, polychlorcamphene, polyethoxyquinoline, polyoxins, polyoxorim, potassium arsenite, potassium cyanate, potassium polysulfide, potassium thiocyanate, prallethrin, precocene I, precocene II, precocene III, pretilachlor, primidophos, primisulfuron, probenazole, prochloraz, proclonol, procyazine, procymidone, prodiamine, profenofos, profluazol, profluralin, profoxydim, proglinazine, promacyl, promecarb, prometon, prometryn, prometryne, pronamide, propachlor, propafos, propamocarb, propanil, propaphos, propaquizafop, propargite, propazine, propetamphos, propham, propiconazole, propineb, propisochlor, propoxur, propoxycarbazone, propyzamide, prosulfalin, prosulfocarb, prosulfuron, prothidathion, prothiocarb, prothiofos, prothoate, protrifenbute, proxan, prymidophos, prynachlor, pydanon, pyracarbolid, pyraclofos, pyraclonil, pyraclostrobin, pyraflufen, pyrazolate, pyrazolynate, pyrazon, pyrazophos, pyrazosulfuron, pyrazoxyfen, pyresmethrin, pyrethrin I, pyrethrin II, pyrethrins, pyribenzoxim, pyributicarb, pyriclor, pyridaben, pyridafol, pyridaphenthion, pyridate, pyridinitril, pyrifenox, pyriftalid, pyrimétaphos, pyrimethanil, pyrimicarbe, pyrimidifen, pyrimitate, pyriminobac, pyrimiphos-éthyl, pyrimiphos-méthyl, pyriproxyfen, pyrithiobac, pyroquilon, pyroxychlor, pyroxyfur, quassia, quinacetol, quinalphos, quinalphos-methyl, quinazamid, quinclorac, quinconazole, quinmerac, quinoclamine, quinomethionate, quinonamid, quinothion, quinoxyfen, quintiofos, quintozene, quizalofop, quizalofop-P, rabenzazole, rafoxanide, reglone, resmethrin, rhodethanil, rimsulfuron, rodethanil, ronnel, rotenone, ryania, sabadilla, salicylanilide, schradan, sebuthylazine, secbumeton, selamectin, sesone, sethoxydim, sevin, siduron, silafluofen, silthiofam, silvex, simazine, simeconazole, simeton, simetryn, simetryne, SMA, sodium arsenite, sodium chlorate, sodium fluoride, sodium hexafluorosilicate, sodium orthophenylphenoxide, sodium pentachlorophenate, sodium pentachlorophenoxide, sodium o-phenylphenoxide, sodium polysulfide, sodium silicofluoride, disodium tetraborate, sodium thiocyanate, solan, sophamide, spinosad, spirodiclofen, spiroxamine, stirofos, streptomycin, sulcofuron, sulcotrione, sulfallate, sulfentrazone, sulfiram, sulfluramid, sulfometuron, sulfosulfuron, sulfotep, sulfotepp, sulfur, sulfuric acid, sulfuryl fluoride, sulglycapin, sulprofos, sultropen, swep, 2,4,5-T, tau-fluvalinate, tazimcarb, 2,4,5-TB, 2,3,6-TBA, TBTO, TBZ, TCA, TCBA, TCMTB, TCNB, TDE, tebuconazole, tebufenozide, tebufenpyrad, tebupirimfos, tebutam, tebuthiuron, tecloftalam, tecnazene, tecoram, tedion, teflubenzuron, tefluthrin, temephos, TEPP, tepraloxydim, terallethrin, terbacil, terbucarb, terbuchlor, terbufos, terbumeton, terbuthylazine, terbutol, terbutryn, terbutryne, terraclor, tetrachloroethane, tetrachlorvinphos, tetraconazole, tetradifon, tetradisul, tetrafluron, tetramethrin, tetranactin, tetrasul, thenylchlor, theta-cypermethrin, thiabendazole, thiacloprid, thiadiazine, thiadifluor, thiamethoxam, thiameturon, thiazafluron, thiazone, thiazopyr, thicrofos, thicyofen, thidiazimin, thidiazuron, thifensulfuron, thifluzamide, thiobencarb, thiocarboxime, thiochlorfenphim, thiochlorphenphime, thiocyclam, thiodan, thiodicarb, thiofanocarb, thiofanox, thiomersal, thiometon, thionazin, thiophanate, thiophanate-ethyl, thiophanate-methyl, thiophos, thioquinox, thiosultap, thiram, thiuram, thuringiensin, tiabendazole, tiocarbazil, tioclorim, tioxymid, TMTD, tolclofos-methyl, tolylfluanid, tolfenpyrad, tolylmercury acetate, toxaphene, 2,4,5-TP, 2,3,3-TPA, TPN, tralkoxydim, tralomethrin, d-trans-allethrin, transfluthrin, transpermethrin, tri-allate, triadimefon, triadimenol, triallate, triamiphos, triarathene, triarimol, triasulfuron, triazamate, triazbutil, triaziflam, triazophos, triazothion, triazoxide, tribenuron, tributyltin oxide, tricamba, trichlamide, trichlorfon, trichlormetaphos-3, trichloronat, trichloronate, trichlorphon, triclopyr, tricyclazole, tricyclohexyltin, hydroxide, tridemorph, tridiphane, trietazine, trifenofos, trifloxystrobin, trifloxysulfuron, triflumizole, triflumuron, trifluralin, triflusulfuron, trifop, trifopsime, triforine, trimeturon, triphenyltin, triprene, tripropindan, tritac, triticonazole, tritosulfuron, uniconazole, uniconazole-P, validamycin, vamidothion, vaniliprole, vernolate, vinclozolin, XMC, xylachlor, xylenols, xylylcarb, zarilamid, zeta-cypermethrin, zinc naphthenate, zineb, zolaprofos, zoxamide trichlorophenate, 1,2-dichloropropane, 1,3-dichloropropene, 2-methoxyethylmercury chloride, 2-phenylphenol, 2,3,3-TPA, 2,3,6-TBA, 2,4-D, 2,4-DB, 2,4-DEB, 2,4-DEP, 2,4-DP, 2,4-MCPB, 2,4,5-T, 2,4,5-TB, 2,4,5-TP, 3,4-DA, 3,4-DB, 3,4-DP, 4-CPA, 4-CPB, 4-CPP, 8-hydroxyquinoline sulfate.

Besonders bevorzugte Pflanzenschutzwirkstoffe sind Fungizide, wie beispielsweise
- Acylalanine wie Benalaxyl, Metalaxyl, Ofurace, Oxadixyl,
- Aminderivate wie Aldimorph, Dodine, Dodemorph, Fenpropimorph, Fenpropidin, Guazatine, Iminoctadine, Spiroxamin, Tridemorph,
- Anilinopyrimidine wie Pyrimethanil, Mepanipyrim oder Cyrodinyl,
- Antibiotika wie Cycloheximid, Griseofulvin, Kasugamycin, Natamycin, Polyoxin oder Streptomycin,
- Azole wie Bitertanol, Bromoconazol, Cyproconazol, Difenoconazole, Dinitroconazol, Epoxiconazol, Fenbuconazol, Fluquiconazol, Flusilazol, Hexaconazol, Imazalil, Metconazol, Myclobutanil, Penconazol, Propiconazol, Prochloraz, Prothioconazol, Tebuconazol, Triadimefon, Triadimenol, Triflumizol, Triticonazol,
- Dicarboximide wie Iprodion, Myclozolin, Procymidon, Vinclozolin,
- Dithiocarbamate wie Ferbam, Nabam, Maneb, Mancozeb, Metam, Metiram, Propineb, Polycarbamat, Thiram, Ziram, Zineb,
- Heterocylische Verbindungen wie Anilazin, Benomyl, Boscalid, Carbendazim, Carboxin, Oxycarboxin, Cyazofamid, Dazomet, Dithianon, Famoxadon, Fenamidon, Fenarimol, Fuberidazol, Flutolanil, Furametpyr, Isoprothiolan, Mepronil, Nuarimol, Probenazol, Proquinazid, Pyrifenox, Pyroquilon, Quinoxyfen, Silthiofam, Thiabendazol, Thifluzamid, Thiophanat-methyl, Tiadinil, Tricyclazol, Triforine,
- Kupferfungizide wie Bordeaux Brühe, Kupferacetat, Kupferoxychlorid, basisches Kupfersulfat,
- Nitrophenylderivate, wie Binapacryl, Dinocap, Dinobuton, Nitrophthal-isopropyl,
- Phenylpyrrole wie Fenpiclonil oder Fludioxonil,
- Schwefel
- Sonstige Fungizide wie Acibenzolar-S-methyl, Benthiavalicarb, Carpropamid, Chlorothalonil, Cyflufenamid, Cymoxanil, Dazomet, Diclomezin, Diclocymet, Diethofencarb, Edifenphos, Ethaboxam, Fenhexamid, Fentin-Acetat, Fenoxanil, Ferimzone, Fluazinam, Fosetyl, Fosetyl-Aluminium, Iprovalicarb, Hexachlorbenzol, Metrafenon, Pencycuron, Propamocarb, Phthalid, Toloclofos-methyl, Quintozene, Zoxamid
- Sulfensäurederivate wie Captafol, Captan, Dichlofluanid, Folpet, Tolylfluanid
- Zimtsäureamide und Analoge wie Dimethomorph, Flumetover oder Flumorph.

Ganz besonders bevorzugt sind die Strobilurine wie Azoxystrobin, Dimoxystrobin, Fluoxastrobin, Kresoxim-methyl, Metominostrobin, Orysastrobin, Picoxystrobin, Pyraclostrobin oder Trifloxystrobin, insbesondere Pyraclostrobin.

In den erfindungsgemäßen Formulierungen können mehrere Pflanzenschutzwirkstoffe
- auch unterschiedlicher Indikation - nebeneinander vorliegen.

Eine bevorzugte Pflanzenschutzformulierung enthält als Komponente a. mindestens einen Pflanzenschutzwirkstoff ausgewählt aus der Klasse der Fungizide.

Besonders bevorzugt sind Wirkstoffformulierungen, in denen der mindestens eine Wirkstoff ausgewählt ist aus der Gruppe der Strobilurine, insbesondere bevorzugt ist Pyraclostrobin.

Weiterhin besonders bevorzugt sind Wirkstoffformulierungen, die als Wirkstoff Mischungen von Pyraclostrobin mit weiteren Pflanzenschutzwirkstoffen enthalten. Solche Mischungspartner sind
- Acylalanine wie Benalaxyl, Metalaxyl, Ofurace, Oxadixyl,
- Aminderivate wie Aldimorph, Dodine, Dodemorph, Fenpropimorph, Fenpropidin, Guazatine, Iminoctadine, Spiroxamin, Tridemorph,
- Anilinopyrimidine wie Pyrimethanil, Mepanipyrim oder Cyrodinyl,
- Antibiotika wie Cycloheximid, Griseofulvin, Kasugamycin, Natamycin, Polyoxin oder Streptomycin,
- Azole wie Bitertanol, Bromoconazol, Cyproconazol, Difenoconazole, Dinitroconazol, Epoxiconazol, Fenbuconazol, Fluquiconazol, Flusilazol, Hexaconazol, Imazalil, Metconazol, Myclobutanil, Penconazol, Propiconazol, Prochloraz, Prothioconazol, Tebuconazol, Triadimefon, Triadimenol, Triflumizol, Triticonazol,
- Dicarboximide wie Iprodion, Myclozolin, Procymidon, Vinclozolin,
- Dithiocarbamate wie Ferbam, Nabam, Maneb, Mancozeb, Metam, Metiram, Propineb, Polycarbamat, Thiram, Ziram, Zineb,
- Heterocylische Verbindungen wie Anilazin, Benomyl, Boscalid, Carbendazim, Carboxin, Oxycarboxin, Cyazofamid, Dazomet, Dithianon, Famoxadon, Fenamidon, Fenarimol, Fuberidazol, Flutolanil, Furametpyr, Isoprothiolan, Mepronil, Nuarimol, Probenazol, Proquinazid, Pyrifenox, Pyroquilon, Quinoxyfen, Silthiofam, Thiabendazol, Thifluzamid, Thiophanat-methyl, Tiadinil, Tricyclazol, Triforine,
- Kupferfungizide wie Bordeaux Brühe, Kupferacetat, Kupferoxychlorid, basisches Kupfersulfat,
- Nitrophenylderivate, wie Binapacryl, Dinocap, Dinobuton, Nitrophthal-isopropyl,
- Phenylpyrrole wie Fenpiclonil oder Fludioxonil,
- Schwefel
- Sonstige Fungizide wie Acibenzolar-S-methyl, Benthiavalicarb, Carpropamid, Chlorothalonil, Cyflufenamid, Cymoxanil, Dazomet, Diclomezin, Diclocymet, Diethofencarb, Edifenphos, Ethaboxam, Fenhexamid, Fentin-Acetat, Fenoxanil, Ferimzone, Fluazinam, Fosetyl, Fosetyl-Aluminium, Iprovalicarb, Hexachlorbenzol, Metrafenon, Pencycuron, Propamocarb, Phthalid, Toloclofos-methyl, Quintozene, Zoxamid
- Sulfensäurederivate wie Captafol, Captan, Dichlofluanid, Folpet, Tolylfluanid
- Zimtsäureamide und Analoge wie Dimethomorph, Flumetover oder Flumorph.

Bevorzugte Mischungspartner sind Metalaxyl, Dodemorph, Fenpropimorph, Fenpropidin, Guazatine, Spiroxamin, Tridemorph, Pyrimethanil, Cyrodinyl, Bitertanol, Bromoconazol, Cyproconazol, Difenoconazole, Dinitroconazol, Epoxiconazol, Fenbuconazol, Fluquiconazol, Flusilazol, Hexaconazol, Imazalil, Metconazol, Myclobutanil, Penconazol, Propiconazol, Prochloraz, Prothioconazol, Tebuconazol, Triadimefon, Triadimenol, Triflumizol, Triticonazol,
Iprodion, Vinclozolin, Maneb, Mancozeb, Metiram, Thiram, Boscalid, Carbendazim, Carboxin, Oxycarboxin, Cyazofamid, Dithianon, Famoxadon, Fenamidon, Fenarimol, Flutolanil, Quinoxyfen, Thiophanat-methyl, Triforine, Dinocap Nitrophthal-isopropyl, Phenylpyrrole wie Fenpiclonil oder Fludioxonil, Acibenzolar-S-methyl, Benthiavalicarb, Carpropamid, Chlorothalonil, Cyflufenamid, Cymoxanil, Fenhexamid, Fentin-Acetat, Fenoxanil, Fluazinam, Fosetyl, Fosetyl-Aluminium, Iprovalicarb, Metrafenon, Zoxamid, Captan, Folpet, Dimethomorph,
Azoxystrobin, Dimoxystrobin, Fluoxastrobin, Kresoxim-methyl, Metominostrobin, Orysastrobin, Picoxystrobin oder Trifloxystrobin.

Besonders bevorzugte Mischungspartner sind Metalaxyl, Fenpropimorph, Fenpropidin, Guazatine, Spiroxamin, Pyrimethanil, Cyrodinyl, Cyproconazol, Difenoconazole, Epoxiconazol, Fenbuconazol, Fluquiconazol, Flusilazol, Hexaconazol, Metconazol, Myclobutanil Propiconazol, Prochloraz, Prothioconazol, Tebuconazol, Triticonazol, Iprodion, Vinclozolin, Boscalid, Carbendazim, Carboxin, Oxycarboxin, Cyazofamid, Dithianon, , Quinoxyfen, Thiophanat-methyl, Dinocap Nitrophthalisopropyl, Fenpiclonil oder Fludioxonil, Benthiavalicarb, Carpropamid, Fenhexamid, Fenoxanil, Fluazinam Iprovalicarb, Metrafenon, Zoxamid.

Dimethomorph, Azoxystrobin, Dimoxystrobin, Fluoxastrobin, Kresoxim-methyl, Metominostrobin, Orysastrobin, Picoxystrobin oder Trifloxystrobin.

Ganz besonders bevorzugte Mischungspartner sind Fenpropimorph, Cyproconazol, Difenoconazole, Epoxiconazol, Fenbuconazol, Fluquiconazol, Flusilazol, Hexaconazol, Metconazol, Myclobutanil Propiconazol, Prochloraz, Prothioconazol, Tebuconazol, Triticonazol,
Boscalid, Dithianon, , Quinoxyfen, Thiophanat-methyl, Dinocap Fenpiclonil oder Fludioxonil,
Benthiavalicarb, Carpropamid, Fenhexamid, Fenoxanil, Fluazinam Iprovalicarb, Metrafenon, Zoxamid, Dimethomorph, Azoxystrobin, Dimoxystrobin, Fluoxastrobin, Kresoximmethyl, Metominostrobin, Orysastrobin, Picoxystrobin oder Trifloxystrobin.

Die erfndungsgemäßen Wirkstoffformulierungen können verschiedene Mengen und Arten von Zusatzstoffen wie beispielsweise Lösungsmittel enthalten.

So können beispielsweise für die Herstellung der statistischen radikalischen Polymere sowie der erfindungsgemäßen Wirkstoffformulierungen Lösungsmittel eingesetzt werden. In einer weiteren Ausführungsform der Erfindung können die erfindungsgemäßen Wirkstoffformulierungen auch in Form einer flüssigen Lösung vorliegen. Geeignete Lösungsmittel sind Alkohole, wie z.B. Methanol, Ethanol, Isopropanol, dipolar-aprotische Lösungsmittel wie z.B. DMF, DMSO oder NMP, aromatische, aliphatische, halogenierte oder unhalogenierte Kohlenwasserstoffe, wie z.B. Hexan, Chlorbenzol, Toluol oder Benzol. Je nach Art der gewünschten Formulierung können die Lösungsmittel aber auch weitestgehend entfernt werden.

Weitestgehend entfernt bedeutet, dass der Anteil des in der Formulierung verbleibenden Lösemittels an der Gesamtmasse der Formulierung weniger als 10, bevorzugt weniger als 2 und insbesondere weniger als 0,5 Gewichtsprozent beträgt.

Demgemäß betrifft die Erfindung auch Wirkstoffformulierungen in getrockneter, fester, d.h. weitestgehend vom Lösungsmittel befreiter Form.

Die festen Wirkstoffformulierungen können in unterschiedlichen makroskopischen Formen vorliegen. Als Beispiele für makroskopische Formen seien sprühgetrocknetes Pulver, Mahlgut, Granulat oder Film genannt.

Die in der erfindungsgemäßen Wirkstoffformulierung enthaltenen statistisch radikalischen Copolymere sind dazu geeignet, den oder die in der erfindungsgemäßen Wirkstoffformulierung enthaltenen Wirkstoff(e) in wässrigen Systemen in Form von nanopartikulären Dispersionen zu dispergieren. Solche nanopartikulären Dispersionen umfassen mindestens eine kontinuierliche Phase, welche in der vorliegenden Erfindung ein wässriges System ist, und mindestens eine dispergierte Phase. Die nanopartikulären Dispersionen können weitere Zusatzstoffe enthalten.

Daher betrifft die vorliegende Erfindung ebenfalls wässrige Dispersionen enthaltend die erfindungsgemäßen Wirkstoffformulierungen, ein wässriges System und gegebenenfalls weitere Zusatzstoffe.

Solche Zusatzstoffe sind Dispergiermittel Andicker, Antischaummittel, Bakterizide und Frostschutzmittel.

Unter wässrigem System wird reines Wasser oder Wasser enthaltend ein Puffersystem oder Salze oder weitere Zusatzstoffe wie beispielsweise mit Wasser mischbare Lösungsmittel oder Mischungen daraus verstanden.

Der pH-Wert des wässrigen Systems liegt im allgemeinen im Bereich von 2 bis 13, bevorzugt von 3 bis 12, besonders bevorzugt von 4 bis 10.

Die Erfindung betrifft auch Verfahren zur Herstellung von wässrigen Dispersionen enthaltend die erfindungsgemäßen Wirkstoffformulierungen und optional weitere Zusatzstoffe dadurch gekennzeichnet, dass man die erfindungsgemäßen Wirkstoffformulierungen mit einem wässrigen System in Kontakt bringt und in üblicher Weise dispergiert.

Eine wichtige Eigenschaft der erfindungsgemäßen Dispersionen ist die durch quasielastische Lichtstreuung ermittelte mittlere Teilchengröße der dispergierten Partikel, die erfingdungsgemäß kleiner als 1 Mikrometer, bevorzugt kleiner als 500 Nanometer ist, besonders bevorzugt kleiner als 100 Nanometer ist. Dabei wird unter Teilchengröße der mittels quasielastischer Lichtstreuung ermittelte Teilchendurchmesser verstanden. Die Methode der quasielastischen Lichtstreuung mittels Faseroptik ist aus dem Stand der Technik, beispielsweise aus H. Auweter, D. Horn, J. Colloid Interf. Sci. 105 (1985) 399*,* D. Lilge, D. Horn, Colloid Polym. Sci. 269 (1991) 704 *oder* H. Wiese, D. Horn, J. Chem. Phys. 94 (1991) 6429 bekannt.

Als Dispergiermittel kommen anionische und nichtionische Tenside zum Einsatz. Anionische Tenside sind Alkylarylsulfonate, Phenylsulfonate, Alkylsulfate, Alkylsulfonate, Alkylethersulfate, Alkylarylethersulfate, Alkylpolyglykoletherphosphate, Polyarylphenyletherphosphate, Alkylsulfosuccinate, Olefinsulfonate, Paraffinsulfonate, Petroleumsulfonate, Tauride, Sarkoside, Fettsäuren, Alkylnaphthalinsulfonsäuren, Naphthalinsulfonsäuren, Ligninsulfonsäuren, Kondensationsprodukte sulfonierter Naphthaline mit Formaldehyd oder mit Formaldehyd und Phenol und gegebenenfalls Harnstoff sowie Kondensationsprodukte aus Phenolsulfonsäure, Formaldehyd und Harnstoff, Lignin-Sulfit-Ablauge und Ligninsulfonate, einschließlich ihrer Alkali-, Erdalkali-, Ammonium- und Amin-Salze, Alkylphosphate sowie Polycarboxylate wie z.Bsp. Polyacrylate, Maleinsäureanhydrid/Olefin-Copolymere (z.Bsp. Sokalan^{®} CP9, BASF).

Nichtionische Tenside sind beispielsweise Alkylphenolalkoxylate, Alkoholalkoxylate, Fettaminalkoxylate, Polyoxyeethylenglycerolfettsäureester, Rizinusölalkoxylate, Fettsäurealkoxylate, Fettsäureamidalkoxylate, Fettsäurepolydiethanolamide, Lanolinethoxylate, Fettsäurepolyglykolester, Isotridecylalkohol, Fettsäureamide, Methylcellulose, Fettsäureester, Silicon-Öle, Alkylpolyglykoside, Glycerolfettsäureester, Polyethylenglykol, Polypropylenglykol, Polyethylenglykolpolypropylenglykol-Blockcopolymere, Polyethylenglykolalkylether, Polypropylenglykolalkylether, Polyethylenglykolpolypropylenglykolether-Blockcopolymere und deren Gemische.

Bevorzugte nichtionische Tenside sind Polyethylenglykolpolypropylenglykol-Blockcopolymere, Polyethylenglykolalkylether, Polypropylenglykolalkylether, Polyethylenglykolpolypropylenglykolether-Blockcopolymere und deren Gemische.

In der erfindungsgemäßen Dispersion enthaltend die Wirkstoffformulierung und ein wässriges System werden gegebenenfalls Tenside als Zusatzstoffe eingesetzt. Geeignete Tenside sind anionische Tenside und nichtionische Tenside, bevorzugt sind Gemische aus beiden.

Für die erfindungsgemäßen Dispersionen geeignete, die Viskosität verändernde Additive (Andicker) sind Verbindungen, die der Formulierung ein pseudoplastisches Fließverhalten verleihen, d.h. hohe Viskosität im Ruhezustand und niedrige Viskosität im bewegten Zustand. Hier sind beispielsweise Polysaccharide bzw. organische Schichtmineralien wie Xanthan Gum^{®} (Kelzan^{®} der Fa. Kelco), Rhodopol^{®} 23 (Rhone Poulenc) oder Veegum^{®} (Firma R.T. Vanderbilt) oder Attaclay^{®} (Firma Engelhardt) zu nennen, wobei Xanthan-Gum^{®} bevorzugt verwendet wird.

Als für die erfindungsgemäßen Dispersionen geeignete Antischaummittel kommen beispielsweise Silikonemulsionen (wie z.Bsp. Silikon^{®} SRE, Firma Wacker oder Rhodorsil^{®} der Firma Rhodia), langkettige Alkohole, Fettsäuren, fluororganische Verbindungen und deren Gemische in Betracht.

Bakterizide können zur Stabilisierung den erfindungsgemäßen Dispersionen zugesetzt werden. Geeignete Bakterizide sind beispielsweise Proxel^{®} der Fa. ICI oder Acticide^{®} RS der Fa. Thor Chemie und Kathon^{®} MK der Firma Rohm & Haas.

Geeignete Frostschutzmittel sind z.B. Ethylenglycol, Propylenglycol oder Glycerin.

Gegebenenfalls können die erfindungsgemäßen Dispersionen 1-5 Gew.% Puffer bezogen auf die Gesamtmenge der hergestellten Formulierung zur pH-Wert Regulation enthalten, wobei sich die Menge und Art des eingesetzten Puffers nach den chemischen Eigenschaften des Wirkstoffes bzw. der Wirkstoffe richtet. Beispiele für Puffer sind Alkalisalze schwacher anorganischer oder organischer Säuren wie z.B. Phosphorsäure, Borsäure, Essigsäure, Propionsäure, Citronensäure, Fumarsäure, Weinsäure, Oxalsäure und Bernsteinsäure.

Die erfindungsgemäßen Wirkstoffformulierungen sind herstellbar durch ein Verfahren, dadurch gekennzeichnet, dass man
(i) den mindestens einen Wirkstoff und das mindestens eine statistische radikalische Copolymer getrennt voneinander in gleichen oder verschiedenen, bevorzugt miteinander mischbaren organischen Lösungsmitteln löst und die so erhaltenen Lösungen miteinander mischt und optional Zusatzstoffe hinzufügt
   oder (ii) eine gemeinsame Lösung herstellt, indem man den mindestens einen Wirkstoff in einem organischen Lösungsmittel gelöst vorlegt und und das mindestens eine statistische radikalische Copolymer und optional weitere Zusatzstoffe hinzufügt und löst und
   man anschließend das oder die Lösungsmittel in üblicher Weise weitestgehend entfernt.

Übliche Verfahren zur Entfernung von Lösungsmitteln sind beispielsweise Sprühtrocknung, Verdampfen bei erniedrigtem Druck, Gefriertrocknung, Verdampfen unter Atmosphärendruck bei gegebenenfalls erhöhter Temperatur. Zu den für dieTrocknung geeigneten Verfahren gehören weiterhin Lyophilisierung oder Trocknen in einem Fließbetttrockner. Man erhält demnach die erfindungsgemäßen Wirkstoffformulierungen in getrockneter Form.

Befindet sich das Copolymer synthesebedingt bereits in einem Lösungsmittel, so wird bevorzugt diese Lösung zur Mischung mit dem Wirkstoff oder der Wirkstofflösung herangezogen.

In einem ersten Schritt werden demnach getrennte Lösungen des mindestens einen statistisch radikalischen Copolymers und des mindestens einen Wirkstoffes im gleichen oder in verschiedenen Lösungsmitteln miteinander gemischt und optional werden weitere Zusatzstoffe zugegeben. Das Herstellen einer Lösung des Polymers entfällt, wenn die Synthese des Polymers in einem Lösungsmittel durchgeführt wird und diese Lösung zum Einsatz im Verfahren zur Herstellung der erfindungsgemäßen Formulierung geeignet ist.

In einem zweiten Schritt wird/werden das/die Lösungsmittel durch geeignete Verfahren in üblicher Weise weitestgehend entfernt.

Die erfindungsgemäßen Wirkstoffformulierung sind weiterhin herstellbar durch ein Verfahren, dadurch gekennzeichnet, dass man
(iii) das mindestens eine statistische radikalische Copolymer (Komponente b) in wässrige Lösung bringt, den mindestens einen Wirkstoff (Komponente a) in einem oder mehreren organischen Lösungsmitteln, das oder die mit Wasser mischbar sind, löst, die Lösungen der Komponenten a und b miteinander mischt, optional weitere Zusatzstoffe hinzufügt und man durch Einbringen von Scherkräften die Wirkstoffformulierung in dispergierter Form erhält und anschließend die Lösungsmittel in üblicher Weise weitestgehend entfernt.

Mischbar mit Wasser bedeutet in diesem Zusammenhang, dass die organischen Lösungsmittel ohne Phasenseparation zu mindestens 10 Gew.-%, bevorzugt zu 15 Gew.-%, besonders bevorzugt zu 20 Gew.-% mit Wasser mischbar sind.

Besteht synthesebedingt bereits eine wässrige Lösung des Copolymers, so wird bevorzugt diese wässrige Lösung zur Mischung mit der Wirkstofflösung herangezogen.

In einem ersten Schritt werden das oder die statistisch radikalischen Copolymere und gegebenenfalls weitere Zusatzstoffe in einem wässrigen System gelöst, sofern eine solche wässrige Lösung nicht bereits unmittelbar aus dem Schritt der Polymersynthese erhalten wird. Des weiteren wird der Wirkstoff bzw. werden die Wirkstoffe in einem mit Wasser mischbaren Lösungsmittel gebenenfalls unter Hinzufügen weiterer Zusatzstoffe gelöst.

Die beiden Lösungen werden dann miteinander gemischt.

Vorteilhaft für den Erhalt feiner Partikel beim Mischen der wässrigen und organischen Phase ist ein Energieeintrag wie beispielsweise die Anwendung von Scherkräften durch hochfrequentes und hochamplitudiges Schütteln oder hochfrequentes Rühren, Turbinieren oder durch Verwendung einer Mischkammer.

Das Mischen kann in kontinuierlicher oder diskontinuierlicher Art und Weise erfolgen. Bevorzugt ist kontinuerliches Mischen.

Die auf diese Art erhaltene Dispersion kann in üblicher Weise wie oben ausgeführt von den Lösungsmitteln befreit werden.

Geeignete Lösungsmittel zur Durchführung der Verfahren zur Herstellung der erfindungsgemäßen Wirkstoffformulierung sind C₁-C₆-Alkylalkohole wie Methanol, Ethanol, Propanol, Isopropanol, 1-Butanol, 2-Butanol, tert-Butanol, Ester, Ketone wie Aceton, Methylethylketon, Methylisopropylketon, Methylisobutylketon, Acetale, Ether, cyclische Ether wie Tetrahydrofuran, aliphatische Carbonsäuren wie Ameisensäure, Essigsäure, Propionsäure, N-substituierte oder N,N-disubstituierte-Carbonsäureamide wie Acetamid, Carbonsäureester wie wie beispielsweise Essigester und Lactone wie beispielsweise Butyrolacton, Dimethylformamid (DMF) und Dimethylpropionamid, aliphatische und aromatische Chlorkohlenwasserstoffe wie Methylenchlorid, Chloroform, 1,2-Dichlorethan oder Chlorbenzol, N-Lactame sowie Mischungen genannter Lösungsmittel.

Bevorzugte Lösungsmittel sind Methanol, Ethanol, Isopropanol, Dimethylformamid, N-Methylpyrrolidon, Methylenchlorid, Chloroform, 1,2-Dichlorethan, Chlorbenzol, Aceton, Methylethylketon, Methylisopropylketon, Methylisobutylketon, Tetrahydrofuran sowie Mischungen genannter Lösungsmittel.

Besonders bevorzugte Lösungsmittel sind Methanol, Ethanol, Isopropanol, Dimethylformamid und Tetrahydrofuran.

Geeignete Feststoffgehalte der Lösungen liegen im Konzentrationsbereich von 0,5 bis 30 Gewichtsprozent (Gew.-%), bevorzugt zwischen 1 und 20 Gew.-%.

Die erfindungsgemäßen Wirkstoffformulierungen liegen nach Entfernen des oder der Lösungsmittel in einem getrockneten Zustand vor.

Selbstverständlich können durch Einsatz von dem Fachmann bekannten Methoden und üblicher Zusatzstoffe die erfindungsgemäßen Wirkstoffformulierungen auch in Form von Suspo- oder Emulsionskonzentraten vorliegen.

Erfindungsgemäß können die Wirkstoffformulierungen Zusatzstoffe enthalten.

Solche geeigneten Zusatzstoffe sind dem Fachmann bekannt. Dies können inerte Hilfsstoffe wie Öle unterschiedlicher Herkunft (Mineralöle, Steinkohlenteeröle, tierische und pflanzliche Öle), aliphatische und aromatische Kohlenwasserstoffe wie alkylierte Naphthaline, Alkohole wie Methanol, Ethanol, Butanol, Cyclohexanol, Ketone wie Cyclohexanon, polare Lösungsmittel und Amine wir N-Methylpyrrolidon sein.

Bevorzugte Zusatzstoffe sind Stabilisatoren und Weichmacher.

Geeignete Stabilisatoren können niedermolekulare Komponenten sein wie beispielsweise Mono- und Diglyceride, Ester der Monogylceride, Alkylglucoside, Lecithin, Fettsäurederivate von Harnstoff und Urethanen.

Geeignete Weichmacher sind Saccharose, Glucose, Lactose, Fructose, Sorbit, Mannit oder Glycerin.

Ein weiterer Gegenstand der Erfindung sind Wirkstoffformulierungen enthaltend Pyraclostrobin, wobei der durch quasielastische Lichtstreuung bestimmte mittlere Teilchendurchmesser weniger als 1 Mikrometer, bevorzugt weniger als 300 Nanometer, besonders bevorzugt weniger als 100 Nanometer beträgt.

Die nachfolgenden Beispiele erläutern die Erfindung, ohne sie aber darauf einzuschränken:

### Beispiel 1:

### 2-Acrylamido-2-Methyl-1-propansulfonsäure-co-Phenoxyethylacrylat-co-n-Butylacrylat (Gewichtsverhältnis 17/33/50)

13.6 g Phenoxyethylacrylat, 26.4 g n-Butylacrylat, 40 g 2-Acrylamido-2-Methylpropansulfonsäure und 2.4 g Wako V60 (Azobisisobutyronitril) wurden in 712 g Dimethylformamid (DMF) gelöst. Die Vorlage wurde mit Stickstoff begast und auf 95°C erwärmt. Nach 4 Stunden unter Rühren wurden 0.8 g Wako V60 in 7.2 g DMF zugegeben und weitere 2 Stunden gerührt.

### Beispiel 2:

Mittels quasielastischer Lichtstreuung bestimmte Teilchengrößen von nanopartikulären Dispersionen von Wirkstoffformulierungen mit unterschiedlichen Polymeren und unterschiedlichen Polymer-Wirkstoff-Verhältnissen.

Gemessen wurde nach 2 und nach 24 Stunden.
- AMPS:: 2-Acrylamido-2-methyl-1-propansulfonsäure
- PEA:: Phenoxyethylacrylat
- n-BA: n-Butylacrylat

Die Gewichtsanteile der eingesetzten Monomere werden beispielsweise durch die Zahlenfolge 50/17/33 angegeben, so dass AMPS/PEA/n-BA 50/17/33 zu lesen ist als ein Polymer, das sich aufbaut aus den Monomeren 2-Acrylamido-2-Methyl-1-propansulfonsäure, Phenoxyethylacrylat
und n-Butylacrylat im Gewichtsverhältnis 50 zu 17 zu 33.

**Tabelle 1:**

| **Polymer** | **Wirkstoff** | **Gewichtsverhältnis Polymer:Wirkstoff** | **Teilchengröße, 2 Stunden nach Herstellung der Dispersion [nm]** | **Teilchengröße, 24 Stunden nach Herstellung der Dispersion [nm]** |
|---|---|---|---|---|
| AMPS/PEA/n-BA 50/17/33 | Pyraclostrubin | 1:1 | 191,9 | 180,7 |
| AMPS/PEA/n-BA 50/17/33 | Pyraclostrubin | 0,5:1 | 125,8 | 136,3 |
| AMPS/PEA/n-BA 50/17/33 | Pyraclostrubin | 0,25:1 | 124,3 | 146,6 |

### Beispiel 4:

### Molmassen der statistisch radikalischen Copolymere

Die Molmassen der Polymere wurden mittels Größenausschlusschromatographie ermittelt. Als Kalibrationssystem dienten Polymethylmethacrylat-Eichproben.

**Tabelle 2:**

| Polymer | Zahlenmittel Mₙ | Gewichtsmittel M_{w} | M_{w}/Mₙ |
|---|---|---|---|
| AMPS/PEA/n-BA 50/17/33 | 5100 | 22500 | 4.4 |

### Beispiel 5:

Fungizide Wirkung verschiedener erfindungsgemäßer Formulierungen von Pyraclostrubin in Abhängigkeit von der Konzentration an appliziertem Wirkstoff. Die Bestimmung des Schadensbildes erfolgte an Weizen der Sorte Kanzler, der zuvor mit einem Pilz der Sorte Puccinia recondita infiziert worden war.

Die Spalte "Wirkstoffformulierung" zeigt die qualitative und quantitative Zusammensetzung des jeweiligen statistischen radikalischen Copolymers mit dem der Wirkstoff in der Formulierung vorliegt. Das Gewichtsverhältnis Polymer-zu-Wirkstoff betrug für alle Formulierungen 2 zu 1.

Die Spalte "Konzentration" gibt an, in welcher Konzentration die Wirkstoffformulierung appliziert wurde.

Die Spalte "Bonitur" gibt auf einer Skala von 0 bis 100 den verbleibenden Pilzbefall nach der Behandlung an, wobei die Zahl 100 Vollbefall bedeutet. Der angegebene Wert ist ein Mittelwert aus drei Einzelwerten.

AMPS: 2-Acrylamido-2-methyl-1-propansulfonsäure

MA, EA, BA, PEA: Methyl-, Ethyl-, Butyl-, Phenoxyethylacrylat

**Tabelle 3:**

| Wirkstoffformulierung | Konzentration [ppm] | Bonitur (Mittelwert aus Messungen) |
|---|---|---|
| | 4 | 0 |
| AMPS/PEA/MA 33/17/50 | 2 | 4 |
| + | 1 | 22 |
| Pyraclostrubin | 0,5 | 60 |
| | 0,25 | 67 |
| | 4 | 1 |
| AMPS/PEA/EA 33/50/17 | 2 | 6 |
| + | 1 | 17 |
| Pyraclostrubin | 0,5 | 50 |
| | 0,25 | 80 |
| | 4 | 1 |
| AMPS/PEA 50/50 | 2 | 3 |
| + | 1 | 27 |
| Pyraclostrubin | 0,5 | 67 |
| | 0,25 | 77 |
| | 4 | 6 |
| AMPS/PEA/BA 50/17/33 | 2 | 18 |
| + | 1 | 37 |
| Pyraclostrubin | 0,5 | 70 |
| | 0,25 | 80 |

## Patentansprüche

1. Wirkstoffformulierung enthaltend
a) mindestens einen Wirkstoff ausgewählt aus der Gruppe der Pflanzenschutzwirkstoffe
b) mindestens ein statistisches radikalisches Copolymer, aufgebaut aus den Monomeren i), ii) und iii), wobei
i) mindestens eine olefinisch ungesättigte Sulfonsäure der Formel I 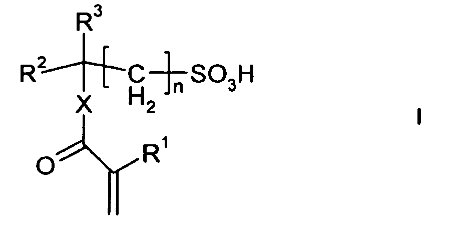 wobei
n 0 bis 10
X O oder NR⁵
R¹ Wasserstoff oder Methyl
R², R³ unabhängig voneinander Wasserstoff, C₁ bis C₆-Alkyl
R⁵ Wasserstoff, Alkyl, Aryl, Alkylaryl, Arylalkyl, Alkoxyalkyl, Aryloxyalkyl, Alkoxyaryl, Hydroxyalkyl, (Di)Alkylaminoalkyl, (Di)Alkylaminoaryl, (Di)Arylaminoalkyl, Alkylarylaminoal- kyl, Alkylarylaminoaryl, wobei die Arylreste substituiert sein können
oder Salze davon oder Mischungen aus Säure und Salzen und
ii) Phenoxyethylacrylat,
iii) optional weiteren olefinisch ungesättigten Monomeren der Formel IIb 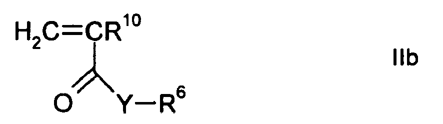 wobei
Y O oder NR⁵,
R¹⁰ Wasserstoff oder Methyl,
R⁵, R⁶ Wasserstoff, Alkyl, Aryl, Alkylaryl, Arylalkyl, Alkoxyalkyl, Aryl-oxyalkyl, Alkoxyaryl, Hydroxyalkyl, (Di)Alkylaminoalkyl, (Di)Alkylaminoaryl, (Di)Arylaminoalkyl, Alkylarylaminoalkyl, Alkylary- laminoaryl, wobei die Arylreste substituiert sein können, bedeutet und
c) optional weitere Zusatzstoffe
herstellbar durch ein Verfahren, **dadurch gekennzeichnet, dass** man
(i) die Komponenten a) und b) und gegebenenfalls c) sowie optional weitere Zusatzstoffe getrennt voneinander in gleichen oder verschiedenen organischen Lösungsmitteln löst und die Lösungen miteinander mischt und optional anschließend das Lösungsmittel in üblicher Weise weitestgehend entfernt ; oder
(ii) eine gemeinsame Lösung der Komponenten a) und b) und gegebenenfalls c) sowie optional weiteren Zusatzstoffen herstellt, indem man eine der Komponenten in einem organischen Lösungsmittel gelöst vorlegt, die weiteren Komponenten hinzufügt und löst und optional anschließend das Lösungsmittel in üblicher Weise weitestgehend entfernt; oder
(iii) die Komponente b) sowie optional weitere Zusatzstoffe in wässrige Lösung bringt, die Komponenten a) und gegebenenfalls c) sowie optional weitere Zusatzstoffe in einem oder mehreren mit Wasser mischbaren organischen Lösungsmitteln löst, die Lösungen der Komponenten miteinander mischt, durch Energieeintrag die Wirkstoffformulierung in dispergierter Form erhält und optional anschließend die Lösungsmittel in üblicher Weise weitestgehend entfernt.

2. Wirkstoffformulierung nach den Anspruch 1, wobei das Monomer i) 2-Acrylamido-2-Methyl-1-propansulfonsäure oder ein Salz davon oder eine Mischung aus Säure und Salz davon ist.

3. Wirkstoffformulierung nach den Ansprüchen 1 oder 2, wobei das mindestens eine statistische radikalische Copolymer aufgebaut ist aus
i) 2-Acrylamido-2-Methyl-1-propansulfonsäure oder Salzen davon oder einer Mischung aus Säure und Salz davon
ii) Phenoxyethylacrylat
iii) mindestens einem olefinisch ungesättigten Monomer der Formel IIc 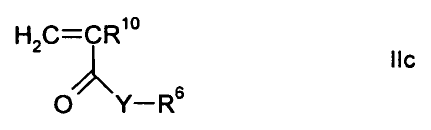 wobei
Y O
R¹⁰ Wasserstoff oder Methyl,
R⁵, R⁶ Wasserstoff, Alkyl, Aryl, Alkylaryl, Arylalkyl, Alkoxyalkyl, Aryloxyalkyl, Alkoxyaryl, Hydroxyalkyl, (Di)Alkylaminoalkyl, (Di)Alkylaminoaryl, (Di)Arylaminoalkyl, Alkylarylaminoalkyl, Alkylarylaminoaryl, wobei die Arylreste substituiert sein können,
bedeuten.

4. Wirkstoffformulierung nach den Ansprüchen 1 bis 3, wobei das mindestens eine statistische radikalische Copolymer aufgebaut ist aus
i) 2-Acrylamido-2-Methyl-1-propansulfonsäure oder Salzen davon oder einer Mischung aus Säure und Salz und
ii) Phenoxyethylacrylat.

5. Wirkstoffformulierung nach den Ansprüchen 1 bis 4, wobei der Anteil der Sulfonsäure oder eines Salzes oder einer Mischung aus Säure und Salz an der Gesamtmasse des Copolymers 10 bis 90 Gewichtsprozent beträgt.

6. Wirkstoffformulierung nach den Ansprüchen 1 bis 5, wobei der Anteil der Sulfonsäure oder eines Salzes davon oder einer Mischung aus Säure und Salz an der Gesamtmasse des Copolymers 30 bis 70 Gewichtsprozent beträgt.

7. Wirkstoffformulierung nach den Ansprüchen 1 bis 6, wobei das Verhältnis der Gewichtsanteile von Komponente a) zu Komponente b) im Bereich von 1:10 bis 10:1 liegt.

8. Wirkstoffformulierung nach den Ansprüchen 1 bis 7, wobei das Verhältnis der Gewichtsanteile von Komponente a) zu Komponente b). im Bereich von 1:4 bis 4:1 liegt.

9. Wirkstoffformulierung nach den Ansprüchen 1 bis 8, wobei das Verhältnis der Gewichtsanteile von Komponente a) zu Komponente b) im Bereich von 1:2 bis 2:1 liegt.

10. Wirkstoffformulierung nach den Ansprüchen 1 bis 9, wobei der mindestens eine Wirkstoff ausgewählt ist aus der Gruppe der Strobilurine.

11. Wirkstoffformulierung nach Anspruch 10, wobei der mindestens eine Wirkstoff Pyraclostrobin ist.

12. Wirkstoffformulierung gemäß den Ansprüchen 1 bis 11 in fester Form.

13. Wirkstoffformulierung gemäß den Ansprüchen 1 bis 11 in Form einer flüssigen Lösung, enthaltend gegebenenfalls weitere Zusatzstoffe.

14. Wirkstoffformulierung gemäß den Ansprüchen 1 bis 11 in Form einer wässrigen Dispersion enthaltend gegebenenfalls weitere Zusatzstoffe.

15. Wirkstoffformulierung nach Anspruch 14, wobei der durch quasielastische Lichtstreuung bestimmte mittlere Teilchendurchmesser weniger als 1 Mikrometer beträgt.

16. Wirkstoffformulierung nach den Ansprüchen 14 oder 15, wobei der durch quasielastische Lichtstreuung bestimmte mittlere Teilchendurchmesser weniger als 300 Nanometer beträgt.

17. Wirkstoffformulierung nach den Ansprüchen 14 bis 16, wobei der durch quasielastische Lichtstreuung bestimmte mittlere Teilchendurchmesser weniger als 100 Nanometer beträgt.

18. Wirkstoffformutierung nach den Ansprüchen 14 bis 16, **dadurch gekennzeichnet, dass** als Wirkstoff Pyraclostrobin eingesetzt wird.

19. Verfahren zur Herstellung von wässrigen Dispersionen **dadurch gekennzeichnet, dass** man die Wirkstoffformulierungen nach den Ansprüchen 1 bis 18, gegebenenfalls unter Zugabe eines oder mehrerer Zusatzstoffe, mit einem wässrigen System in Kontakt bringt und in üblicher Weise dispergiert.

20. Verfahren zur Bekämpfung von Schadpilzen, **dadurch gekennzeichnet, dass** man die Schadpilze, deren Lebensraum oder die von ihnen freizuhaltenden Pflanzen, Flächen, Materialien
oder Räume mit einer wirksamen Menge einer Formulierung gemäß den Ansprüchen 1 bis 18 behandelt.

## Claims

1. An active compound formulation comprising
a) at least one active compound chosen from the group of the plant protection active compounds
b) at least one random radical copolymer formed from the monomers i), ii) and iii), in which
i) is at least one olefinically unsaturated sulfonic acid of the formula I 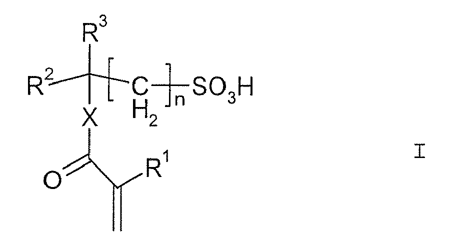 in which
n is 0 to 10
X is O or NR⁵
R¹ is hydrogen or methyl
R², R³ are, independently of one another, hydrogen or C₁-C₆- alkyl
R⁵ is hydrogen, alkyl, aryl, alkylaryl, arylalkyl, alkoxyalkyl, aryloxyalkyl, alkoxyaryl, hydroxyalkyl, (di)alkylaminoalkyl, (di)alkylaminoaryl, (di)arylaminoalkyl, alkylarylaminoalkyl, or alkylarylaminoaryl, it being possible for the aryl radicals to be substituted, or salts thereof or mixtures of acid and salts, and
ii) phenoxyethyl acrylate,
iii) optionally additional olefinically unsaturated monomers of the formula IIb 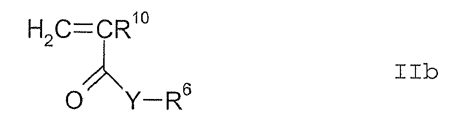 in which
Y is 0 or NR⁵,
R¹⁰ is hydrogen or methyl,
R⁵, R⁶ are hydrogen, alkyl, aryl, alkylaryl, arylalkyl, alkoxyalkyl, aryloxyalkyl, alkoxyaryl, hydroxyalkyl, (di)alkylaminoalkyl, (di)alkylaminoaryl, (di)arylaminoalkyl, alkylarylaminoalkyl or alkylarylaminoaryl, it being possible for the aryl radicals to be substituted, and
c) optionally additional additives,
which can be prepared by a process which comprises
(i) dissolving the components a) and b) and optionally c), and optionally additional additives, separately from one another, in identical or different organic solvents and mixing the solutions with one another and optionally subsequently removing the solvent in a conventional way to the greatest possible extent; or
ii) preparing a combined solution of the components a) and b) and optionally c), and optionally additional additives, by presenting one of the components dissolved in an organic solvent, adding the additional components and dissolving, and optionally subsequently removing the solvent in a conventional way to the greatest possible extent; or
iii) forming an aqueous solution of the component b), and optionally additional additives, dissolving the components a) and optionally c), and optionally additional additives, in one or more water-miscible organic solvents, mixing the solutions of the components with one another, obtaining the active compound formulation in dispersed form by introduction of energy, and optionally subsequently removing the solvents in a conventional way to the greatest possible extent.

2. The active compound formulation according to claim 1, wherein the monomer i) is 2-acrylamido-2-methyl-1-propanesulfonic acid or a salt thereof or a mixture of acid and salt thereof.

3. The active compound formulation according to claim 1 or 2, wherein the at least one random radical copolymer is formed from
i) 2-acrylamido-2-methyl-1-propanesulfonic acid or salts thereof or a mixture of acid and salt thereof
ii) phenoxyethyl acrylate
iii)at least one olefinically unsaturated monomer of the formula IIc 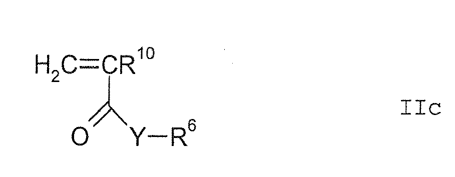 in which Y is O
R¹⁰ is hydrogen or methyl,
R⁵, R⁶ are hydrogen, alkyl, aryl, alkylaryl, arylalkyl, alkoxyalkyl, aryloxyalkyl, alkoxyaryl, hydroxyalkyl, (di)alkylaminoalkyl, (di)alkylaminoaryl, (di)arylaminoalkyl, alkylarylaminoalkyl or alkylarylaminoaryl, it being possible for the aryl radicals to be substituted.

4. The active compound formulation according to claims 1 to 3, wherein the at least one random radical copolymer is formed from
i) 2-acrylamido-2-methyl-1-propanesulfonic acid or salts thereof or a mixture of acid and salt, and
ii) phenoxyethyl acrylate.

5. The active compound formulation according to claims 1 to 4, wherein the proportion of the sulfonic acid or of a salt or of a mixture of acid and salt in the total weight of the copolymer is 10 to 90 percent by weight.

6. The active compound formulation according to claims 1 to 5, wherein the proportion of the sulfonic acid or of a salt thereof or of a mixture of acid and salt in the total weight of the copolymer is 30 to 70 percent by weight.

7. The active compound formulation according to claims 1 to 6, wherein the ratio of the proportion by weight of component a) to the proportion by weight of component b) ranges from 1:10 to 10:1.

8. The active compound formulation according to claims 1 to 7, wherein the ratio of the proportion by weight of component a) to the proportion by weight of component b) ranges from 1:4 to 4:1.

9. The active compound formulation according to claims 1 to 8, wherein the ratio of the proportion by weight of component a) to the proportion by weight of component b) ranges from 1:2 to 2:1.

10. The active compound formulation according to claims 1 to 9, wherein the at least one active compound is chosen from the group of the strobilurins.

11. The active compound formulation according to claim 10, wherein the at least one active compound is pyraclostrobin.

12. The active compound formulation according to claims 1 to 11, in solid form.

13. The active compound formulation according to claims 1 to 11, in the form of a fluid solution optionally comprising additional additives.

14. The active compound formulation according to claims 1 to 11, in the form of an aqueous dispersion optionally comprising additional additives.

15. The active compound formulation according to claim 14, wherein the average particle diameter, determined by quasielastic light scattering, is less than 1 micrometer.

16. The active compound formulation according to claim 14 or 15, wherein the average particle diameter, determined by quasielastic light scattering, is less than 300 nanometers.

17. The active compound formulation according to claims 14 to 16, wherein the average particle diameter, determined by quasielastic light scattering, is less than 100 nanometers.

18. The active compound formulation according to claims 14 to 16, wherein pyraclostrobin is used as active compound.

19. A process for the preparation of aqueous dispersions, which comprises bringing the active compound formulation according to claims 1 to 18, optionally with addition of one or more additives, into contact with an aqueous system and conventionally dispersing.

20. A process for combating harmful fungi, which comprises treating the harmful fungi, their habitat or the plants, surfaces, materials or spaces to be kept free therefrom with an effective amount of a formulation according to claims 1 to 18.

## Revendications

1. Formulation de substances actives, contenant
a) au moins une substance active choisie dans le groupe des substances actives de phytoprotection
b) au moins un copolymère radicalaire statistique, constitué par les monomères i), ii) et iii), où
i) signifie au moins un acide sulfonique oléfiniquement insaturé de formule I 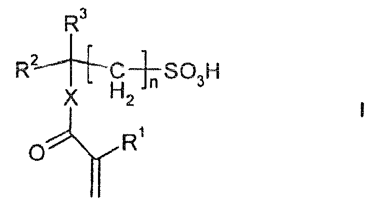 où
n vaut 0 à 10
X signifie O ou NR⁵,
R¹ signifie hydrogène ou méthyle,
R², R³ signifient, indépendamment l'un de l'autre, hydrogène, C₁-C₆-alkyle
R⁵ signifie hydrogène, alkyle, aryle, alkylaryle, arylalkyle, alcoxyalkyle, aryloxyalkyle, alcoxyaryle, hydroxyalkyle, (di)alkylaminoalkyle, (di)alkylaminoaryle, (di)arylaminoalkyle, alkylarylaminoalkyle, alkylarylaminoaryle, où les radicaux aryle peuvent être substitués
ou des sels de celui-ci ou des mélanges d'acide et de sels et
ii) signifie de l'acrylate de phénoxyéthyle,
iii) signifie éventuellement d'autres monomères oléfiniquement insaturés de formule IIb 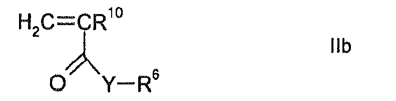 où
Y signifie O ou NR⁵,
R¹⁰ signifie hydrogène ou méthyle,
R⁵, R⁶ signifient hydrogène, alkyle, aryle, alkylaryle, arylalkyle, alcoxyalkyle, aryloxyalkyle, alcoxyaryle, hydroxyalkyle, (di)alkylaminoalkyle, (di)alkylaminoaryle, (di)arylaminoalkyle, alkylarylaminoalkyle, alkylarylaminoaryle, où les radicaux aryle peuvent être substitués et
c) éventuellement d'autres additifs
pouvant être préparée par un procédé, **caractérisé en ce que**
(i) on dissout les composants a) et b) et le cas échéant c) ainsi qu'éventuellement d'autres additifs séparément les uns des autres dans des solvants organiques identiques ou différents et on mélange les solutions les unes avec les autres puis on élimine éventuellement dans une large mesure le solvant de manière usuelle ; ou
(ii) on prépare une solution commune des composants a) et b) et le cas échéant c) ainsi qu'éventuellement d'autres additifs, **en ce qu'**on dispose au préalable un des composants dissous dans un solvant organique, on ajoute et on dissout les autres composants et on élimine éventuellement dans une large mesure le solvant de manière usuelle ; ou
(iii) on amène le composant b) ainsi qu'éventuellement d'autres additifs en solution aqueuse, on dissout les composants a) et le cas échéant c) ainsi qu'éventuellement d'autres additifs dans un ou plusieurs solvants organiques miscibles à l'eau, on mélange les solutions des composants les unes avec les autres, on obtient la formulation de substances actives sous forme dispersée par une introduction d'énergie et on élimine ensuite éventuellement dans une large mesure les solvants de manière usuelle.

2. Formulation de substances actives selon la revendication 1, où le monomère i) est l'acide 2-acrylamido-2-méthyl-1-propanesulfonique ou un sel de celui-ci ou un mélange d'acide et de sel de celui-ci.

3. Formulation de substances actives selon les revendications 1 ou 2, où ledit au moins un copolymère radicalaire statistique est constitué par
i) de l'acide 2-acrylamido-2-méthyl-1-propanesulfonique ou des sels de celui-ci ou un mélange d'acide et de sel de celui-ci,
ii) de l'acrylate de phénoxyéthyle,
iii) au moins un monomère oléfiniquement insaturé de formule IIc 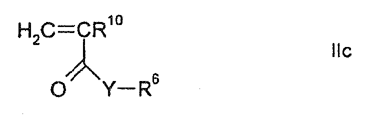 où
Y signifie O
R¹⁰ signifie hydrogène ou méthyle,
R⁵, R⁶ signifient hydrogène, alkyle, aryle, alkylaryle, arylalkyle, alcoxyalkyle, aryloxyalkyle, alcoxyaryle, hydroxyalkyle, (di)alkylaminoalkyle, (di)alkylaminoaryle, (di)arylaminoalkyle, alkylarylaminoalkyle, alkylarylaminoaryle, où les radicaux aryle peuvent être substitués.

4. Formulation de substances actives selon les revendications 1 à 3, où ledit au moins un copolymère radicalaire statistique est constitué par
i) de l'acide 2-acrylamido-2-méthyl-1-propanesulfonique ou des sels de celui-ci ou un mélange d'acide et de sel et
ii) de l'acrylate de phénoxyéthyle.

5. Formulation de substances actives selon les revendications 1 à 4, où la proportion de l'acide sulfonique ou d'un sel ou d'un mélange d'acide et de sel par rapport à la masse totale du copolymère est de 10 à 90% en poids.

6. Formulation de substances actives selon les revendications 1 à 5, où la proportion d'acide sulfonique ou d'un sel de celui-ci ou d'un mélange d'acide et de sel par rapport à la masse totale du copolymère est de 30 à 70.

7. Formulation de substances actives selon les revendications 1 à 6, où le rapport des proportions pondérales du composant a) au composant b) se situe dans la plage de 1:10 à 10:1.

8. Formulation de substances actives selon les revendications 1 à 7, où le rapport des proportions pondérales du composant a) au composant b) se situe dans la plage de 1:4 à 4:1.

9. Formulation de substances actives selon les revendications 1 à 8, où le rapport des proportions pondérales du composant a) au composant b) se situe dans la plage de 1:2 à 2:1.

10. Formulation de substances actives selon les revendications 1 à 9, où ladite au moins une substance active est choisie dans le groupe des strobilurines.

11. Formulation de substances actives selon la revendication 10, où ladite au moins une substance active est la pyraclostrobine.

12. Formulation de substances actives selon les revendications 1 à 11 sous forme solide.

13. Formulation de substances actives selon les revendications 1 à 11 sous forme d'une solution liquide, contenant le cas échéant d'autres additifs.

14. Formulation de substances actives selon les revendications 1 à 11 sous forme d'une dispersion aqueuse, contenant le cas échéant d'autres additifs.

15. Formulation de substances actives selon la revendication 14, où le diamètre moyen des particules déterminé par dispersion quasi-élastique de la lumière est inférieur à 1 micromètre.

16. Formulation de substances actives selon les revendications 14 ou 15, où le diamètre moyen des particules déterminé par dispersion quasi-élastique de la lumière est inférieur à 300 nanomètres.

17. Formulation de substances actives selon les revendications 14 à 16, où le diamètre moyen des particules déterminé par dispersion quasi-élastique de la lumière est inférieur à 100 nanomètres.

18. Formulation de substances actives selon les revendications 14 à 16, **caractérisée en ce qu'**on utilise de la pyraclostrobine comme substance active.

19. Procédé pour la préparation de dispersions aqueuses, **caractérisé en ce qu'**on met en contact les formulations de substances actives selon les revendications 1 à 18, le cas échéant avec addition d'un ou de plusieurs additifs, avec un système aqueux, et on les disperse de manière usuelle.

20. Procédé pour lutter contre des champignons nuisibles, **caractérisé en ce qu'**on traite les champignons nuisibles, leur espace de vie ou les plantes, surfaces, matériaux ou espaces à protéger contre lesdits champignons nuisibles avec une quantité active d'une formulation selon les revendications 1 à 18.
